(19) Europäisches Patentamt
European Patent Office
Office européen des brevets

(11) EP 1 498 459 A1

(12) **EUROPEAN PATENT APPLICATION**
published in accordance with Art. 158(3) EPC

(43) Date of publication:
**19.01.2005 Bulletin 2005/03**

(21) Application number: **03747214.9**

(22) Date of filing: **11.04.2003**

(51) Int Cl.[7]: **C08L 101/04**, C08K 3/00, H01S 3/17

(86) International application number:
**PCT/JP2003/004600**

(87) International publication number:
**WO 2003/091343 (06.11.2003 Gazette 2003/45)**

(84) Designated Contracting States:
**AT BE BG CH CY CZ DE DK EE ES FI FR GB GR HU IE IT LI LU MC NL PT RO SE SI SK TR**

(30) Priority: **25.04.2002 JP 2002123785**

(71) Applicant: **Daikin Industries, Ltd.**
**Osaka-shi, Osaka 530-8323 (JP)**

(72) Inventors:
- **ARAKI, Takayuki, Yodogawa-seisakusho Settsu-shi, Osaka 566-8585 (JP)**
- **TANAKA, Yoshito, Yodogawa-seisakusho Settsu-shi, Osaka 566-8585 (JP)**
- **ANDO, Yoshito, Yodogawa-seisakusho Settsu-shi, Osaka 566-8585 (JP)**
- **KOMATSU, Yuzo, Yodogawa-seisakusho Settsu-shi, Osaka 566-8585 (JP)**

(74) Representative:
**Sternagel, Fleischer, Godemeyer & Partner**
**Patentanwälte**
**Braunsberger Feld 29**
**51429 Bergisch Gladbach (DE)**

(54) **FLUORINATED OPTICAL MATERIAL COMPRISING FLUOROPOLYMER HAVING FUNCTIONAL GROUP CAPABLE OF FORMING COMPLEX WITH RARE EARTH METAL ION**

(57) There is provided an optical material which is an organic composition comprising a rare earth metal ion and a fluorine-containing polymer having functional group being capable of forming a complex with the rare earth metal ion and is suitable as an optical material for optical communication, in which the fluorine-containing polymer having functional group being capable of forming a complex with the rare earth metal ion has a side chain having at least two hetero-atoms in its structural unit and has a maximum absorption coefficient of not more than 1 $cm^{-1}$ in each bandwidth of from 1,290 to 1,320 nm, from 1,530 to 1,570 nm and from 600 to 900 nm, and the rare earth metal ion is at least one selected from the group consisting of erbium (Er) ion, thulium (Tm) ion, praseodymium (Pr) ion, holmium (Ho) ion, neodymium (Nd) ion, europium (Eu) ion, dysprosium (Dy) ion, samarium (Sm) ion, cerium (Ce) ion and terbium (Tb) ion.

FIG. 1

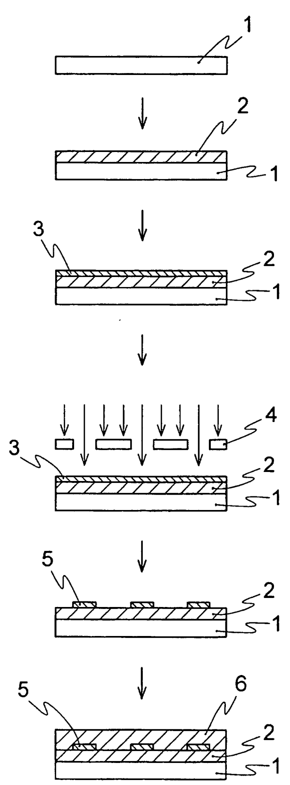

EP 1 498 459 A1

## Description

TECHNICAL FIELD

The present invention relates to optical materials containing a fluorine-containing polymer having functional group being capable of forming a complex with a rare earth metal ion, and particularly relates to compositions useful as an optical material and to materials used suitably in the field of optical communication where light amplification technology is used and in the field where light emitting phenomenon is used.

BACKGROUND ART

An optical communication system using an optical fiber network enables high speed transmission of a large amount of data. Generally a quartz optical fiber is used as the optical fiber. However recently in plastic optical fiber (POF), a POF called GI (graded index) type POF which has a wide band (400 Mbps for 100 m transmission) and assures a low transmission loss has been developed, and construction of an optical communication network for domestic use is also considered. In the respective fibers, there is a difference in a bandwidth of light for transmission. In the quartz fiber, 1,300 nm band and 1,500 nm band are mainly used, and in the plastic (acryl) fiber, 650 nm band is mainly used.

In either of quartz optical fiber and plastic optical fiber, in an optical communication system, there arises an attenuation of an optical signal due to a loss caused at the time of transmission, branching, connection and switching. An attenuation of an optical signal is a problem particularly in case of a long distance transmission. Therefore a light amplifying device is needed to compensate for the attenuation of optical signals.

Example of a light amplifying device for an optical communication system using quartz optical fiber network is, for instance, a so-called fiber type light amplifying device disclosed in the bulletin ("Light amplification with Er-doped optical fiber and application thereof", by Masataka Nakazawa, Applied Physics Vol. 59, No. 9, pp. 1175 - 1192 (1990)). On this device are applied pumping of electron in Erbium (Er) cation atom by visible or near infrared light and a phenomenon of generating fluorescence having a wavelength of about 1,500 nm band.

On the other hand, a luminant has been put into practical use for an inorganic glass containing a rare earth metal ion and for an electronic device for laser beam. However a present situation is such that because of difficulty in production and processing, applications thereof are limited. Also though a polymer composition is disclosed in JP64-26583A, intensity of luminescence is low.

However in case of a light amplifying device (EDFA) using Er-doped optical fiber, a 20 to 30 m long optical fiber for amplification is necessary to obtain an amplifying gain of 30 dB (1000 times). The reason for this is that for example, while a fiber type light amplifying device for 1,550 nm band uses an erbium ion ($Er^{3+}$)-doped silica fiber, if a doping amount is increased, a cluster is formed due to association of doping ions and the amplifying action is lowered. Therefore the doping amount is decreased to 10 to 1,000 ppm and a fiber length is increased to obtain an amplifying action. As mentioned above, in case of a fiber type light amplifying device (glass), there is a limit in shortening a length of interface of the light amplifying device. Namely, there is a limit in down-sizing and cost reduction of the light amplifying device.

Also since a base material is inorganic glass, elasticity and mold-processability have not always been satisfactory.

Further in the case of a fiber type light amplifying device (glass), it is difficult to make a flat light amplifying device. This causes a problem when an optical integrated circuit is made using a light amplifying device and other optical devices.

Also in the case of an inorganic device as a luminant, because of difficulty in production and processing, applications thereof are limited.

On the other hand, addition of cation of rare earth metal to an organic high molecular material has been studied. For example, JP5-86189A discloses polysiloxane in which a rare earth metal ion obtained by using chlorosilane having an organic group and a chloride of rare earth element as starting materials is introduced to a high molecular chain. Also JP5-88026A discloses materials such as polyacrylate and polysiloxane containing a complex such as acetylacetone complex of rare earth metal ion which is excellent in solubility in an organic solvent and oxidation resistance. Further in the preprint of High Molecule Society, Vol.43(1), 29 (1994), a material obtained by synthesizing a rare earth element cation salt of a polymerizable organic acid such as acrylic acid or methacrylic acid and polymerizing or copolymerizing such a monomer carrying a rare earth cation is reported, in which a cation concentration can be increased to about 10 % by weight. By those methods, a rare earth element cation can be added in a high concentration to an organic high molecular material excellent in mold processability. However there are disadvantages that the synthesizing process is complicated and may give rise to an economical restriction in industrial application and resins to be used are limited to those having relatively low heat resistance.

Also in order to enhance dispersibility of a rare earth metal ion in a resin, it is necessary that carboxylic acid groups are introduced in a high concentration to a structure of a polymer constituting an acrylic resin. However such an acrylic resin has a large water absorption and therefore cannot be practically used as an optical material which hates presence of water.

Further heat resistance is not sufficient and during a step for producing a light amplifying device or during use thereof, lowering of amplifying characteristics arises.

Also when light source having a wavelength band of 1,300 nm and 1,500 nm is used, there is a substantial disadvantage that transmission of light is lowered since a carbon-hydrogen bond and oxygen-hydrogen bond in the organic material absorb light of such bands. Therefore studies have been made with respect to replacement of hydrogen with heavy hydrogen (D) or fluorine. As a result, transparency can be improved to a certain extent, but in the case of the replacement with heavy hydrogen, water absorption of the material does not change, and in the case of the replacement with fluorine, when the replacement is made to an extent of having an effect on transparency, there are disadvantages that dispersibility of a rare earth metal ion is significantly lowered and also solubility in a solvent is lowered. Also in the case of the replacement with fluorine, a glass transition temperature is not increased and the problem with heat resistance cannot be solved. Further for application on a luminant using luminous phenomenon, there is a problem with light resistance of a polymer to be used.

As mentioned above, all the problems in the fields of optical amplification material and light emission material have not been solved, and novel optical amplification material and light emission material which can solve those problems are desired.

DISCLOSURE OF INVENTION

The present inventors have made intensive studies to solve the mentioned problems and as a result, have found a novel fluorine-containing polymer having functional group which has a structure being capable of forming a complex with a rare earth metal ion and have found that high performance optical materials, namely light amplification material and light emission material can be obtained by a combination of the fluorine-containing polymer having functional group and a rare earth metal ion, and particularly a combination of a rare earth metal ion and a specific fluorine-containing polymer having, in its side chain, a functional group being capable of forming a complex with the rare earth metal ion is useful for optical materials, namely light amplification material and light emission material.

The present inventors have completed the present invention based on those discoveries.

The present invention relates to a resin composition comprising:

(I) a fluorine-containing polymer having functional group and
(II) a rare earth metal ion,

in which a functional group Y of the fluorine-containing polymer (I) having functional group contains two or more kinds of different hetero-atoms selected from the group consisting of elements of the groups 14, 15 and 16 in Periodic Table of Elements and is capable of forming coordinate bond with the rare earth metal ion (II) via those two or more kinds of different hetero-atoms.

Examples of a possible structure of the coordinate bond by the functional group Y of the fluorine-containing polymer (I) having functional group with the rare earth metal ion (II) are, for instance, structures of the following i) and ii).

i) a structure of any of four-membered, five-membered or six-membered ring formed by coordinate bond of two or more kinds of hetero-atoms contained in one functional group Y via the rare earth metal ion (II):

Example thereof is, for instance,

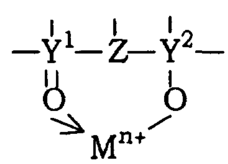

wherein $M^{n+}$ is a rare earth metal ion, $Y^1$, $Y^2$ and Z are the same as $Y^1$, $Y^2$ and Z explained later.

ii) a structure formed by coordinate bond of a hetero-atom of the functional group Y and a hetero-atom of a neighboring functional group $Y^1$ via the rare earth metal ion (II):

Examples thereof are, for instance,

coordination in a molecule:

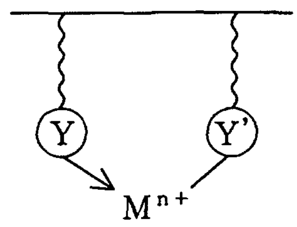

and coordination between molecules:

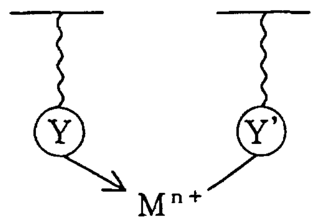

It does not matter if the above-mentioned structures i) and ii) are structures in which coordinate bond is formed with two or more rare earth metal ions ($M^{n+}$) on one functional group Y (or $Y^1$).

Among those structures, the structure i) is preferred from the point that the coordinate bond (forming a complex) with the rare earth metal ion can be formed relatively easily and that amplification efficiency and light emission efficiency can be enhanced and maintained. The structure i) is also preferred from the point that processability and moldability of the fluorine-containing polymer after forming coordinate bond (forming a complex) with the rare earth metal ion can become good.

It is preferable that the functional group Y which is contained in the polymer and is capable of forming coordinate bond with the rare earth metal ion contains a structure of:

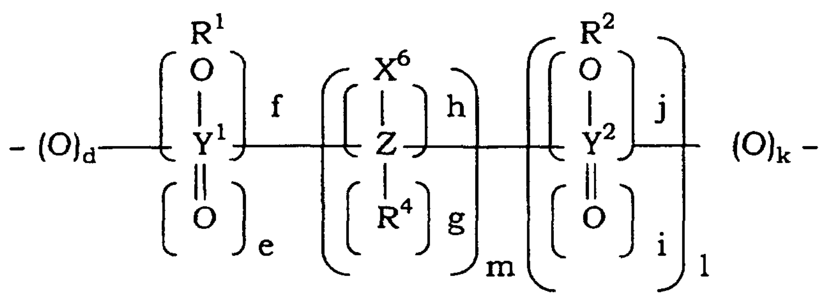

wherein d, f, g, h, j, k, l and m are the same or different and each is 0 or 1; e and i are the same or different and each is 1 or 2; $Y^1$ and $Y^2$ are independent and each is an atom selected from the group consisting of elements of the group 14, the group 15 excluding nitrogen and the group 16 excluding oxygen; Z is an atom of C, N, O, P, As, Sb or Bi; when Z is C atom, g and h are 1; when Z is O atom, g and h are 0; when Z is O atom and l is 0, k is 0; $X^6$ is an atom selected from H, D and halogen atoms; $R^1$ and $R^2$ are the same or different and each is an atom of H or D, a hydrocarbon group having 1 to 20 carbon atoms or a hydrocarbon group having 1 to 20 carbon atoms in which a part or the whole of hydrogen atoms are substituted with heavy hydrogen or halogen atoms; $R^4$ is H, D, halogen atom, a hydrocarbon group having 1 to 20 carbon atoms or a hydrocarbon group having 1 to 20 carbon atoms in which a part or the whole of hydrogen atoms are substituted with heavy hydrogen or halogen atoms; when $Y^1$ is S atom, either of m or l is 1; when $Y^1$ is C atom, e is 1 and f is 0; when $Y^2$ is C atom, i is 1 and j is 0; when f is 1, e is 1; when j is 1, i is 1; $Y^1$, Z and $Y^2$ of the functional group Y are not carbon atoms at the same time, and at least one of $Y^1$, Z and $Y^2$ is a hetero-atom other than oxygen.

Example of the preferred fluorine-containing polymer (I) having functional group being capable of forming a complex with the rare earth metal ion is a fluorine-containing polymer represented by the formula (1):

$$-(M)-(A)- \qquad (1)$$

in which the structural unit M is a structural unit derived from an ethylenic monomer and represented by the formula (2):

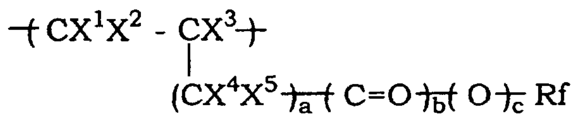

(2)

wherein $X^1$ and $X^2$ are the same or different and each is H or F; $X^3$ is H, F, $CH_3$ or $CF_3$; $X^4$ and $X^5$ are the same or different and each is H, F or $CF_3$; Rf is a monovalent organic group forming a side chain of the polymer and having at least one functional group Y in the side chain or at an end of the side chain, in which the functional group Y comprises two or more kinds of different hetero-atoms selected from elements of the groups 14, 15 and 16; a is 0 or an integer of from 1 to 3; b and c are the same or different and each is 0 or 1, and coordinate bond can be formed with the rare earth metal ion (II) via the two or more kinds of different hetero-atoms in the functional group Y,
the structural unit A is a structural unit derived from a monomer copolymerizable with the monomer for the structural unit M,
and the structural unit M and the structural unit A are contained in amounts of from 0.1 to 100 % by mole and from 0 to 99.9 % by mole, respectively.

The composition of the present invention, when used for optical materials, namely light amplification material and light emission material, irrespective of a high fluorine content, is excellent in dispersibility of the rare earth metal ion, light resistance and heat resistance and has a high amplification ratio and a high intensity of luminescence. Also since a refractive index is low, characteristics for a light emitter are enhanced.

The fluorine-containing polymer (I) having functional group may be a fluorine-containing polymer having a moiety represented by the formula (10):

$$-Rf^5-Y^7(=O)_t-NX^8-Y^8(=O)_u-Rf^6- \qquad (10)$$

wherein t and u are the same or different and each is 1 or 2; $Y^7$ and $Y^8$ are independent and each is C atom or S atom; $X^8$ is H, D or halogen atom; when $Y^7$ is C atom, t is 1; when $Y^8$ is C atom, u is 1; $Rf^5$ is a fluorine-containing alkylene group having 1 to 50, preferably 1 to 48 carbon atoms or a fluorine-containing alkylene group having 2 to 100, preferably 2 to 98 carbon atoms and ether bond; $Rf^6$ is a fluorine-containing alkylene group having 1 to 50, preferably 1 to 48 carbon atoms or a fluorine-containing alkylene group having 2 to 100, preferably 2 to 98 carbon atoms and ether bond; when $Rf^5$ is the fluorine-containing alkylene group having 1 to 50 carbon atoms and $Rf^6$ is the fluorine-containing alkylene group having 1 to 50 carbon atoms, the sum of carbon atoms of $Rf^5$ and $Rf^6$ is not more than 51, and when either of $Rf^5$ or $Rf^6$ is the fluorine-containing alkylene group having 2 to 100 carbon atoms and ether bond, the sum of carbon atoms of $Rf^5$ and $Rf^6$ is not more than 101, and also when $Rf^5$ is the fluorine-containing alkylene group having 1 to 48 carbon atoms and $Rf^6$ is the fluorine-containing alkylene group having 1 to 48 carbon atoms, the sum of carbon atoms of $Rf^5$ and $Rf^6$ is not more than 49, and when either of $Rf^5$ or $Rf^6$ is the fluorine-containing alkylene group having 2 to 98 carbon atoms and ether bond, the sum of carbon atoms of $Rf^5$ and $Rf^6$ is not more than 99.

Further the fluorine-containing polymer (I) having functional group may have a cure site.

The fluorine-containing resin composition is a composition comprising the fluorine-containing polymer (I) having functional group and the rare earth metal ion (II) and is used for optical materials, namely light amplification material and light emission material. It is preferable that the fluorine-containing polymer (I) having functional group is a non-crystalline fluorine-containing polymer having the fluorine content of not less than 25 % by weight, preferably not less than 40 % by weight. Also it is preferable that the fluorine-containing polymer (I) having functional group has a side chain having at least two hetero-atoms in its structural unit and has a maximum absorption coefficient of not more than 1 $cm^{-1}$ in wavelength ranges of from 1,290 to 1,320 nm and/or from 1,530 to 1,570 nm and/or from 600 to 900 nm. It is further preferable that in the fluorine-containing resin composition, the rare earth metal ion (II) is at least one selected from the group consisting of erbium (Er) ion, thulium (Tm) ion, praseodymium (Pr) ion, holmium (Ho) ion, neodymium

(Nd) ion, europium (Eu) ion, dysprosium (Dy) ion, samarium (Sm) ion, cerium (Ce) ion and terbium (Tb) ion.

Also the fluorine-containing resin composition may be formed into a curable fluorine-containing resin composition by further adding an active energy curing initiator (III).

The present invention also relates to optical devices, namely light amplifying device and light emitting device made of the fluorine-containing resin composition to be used for the optical materials, namely the light amplification materials and the light emission materials.

BRIEF DESCRIPTION OF DRAWING

Fig. 1 is a flow chart showing production steps for producing the light amplifying device and light emitting device of the present invention.

BEST MODE FOR CARRYING OUT THE INVENTION

The fluorine-containing resin composition of the present invention comprises:

(I) the fluorine-containing polymer having functional group and
(II) the rare earth metal ion,

in which the functional group Y of the fluorine-containing polymer (I) having functional group contains two or more kinds of different hetero-atoms selected from the group consisting of elements of the groups 14, 15 and 16 of Periodic Table of Elements and is capable of forming coordinate bond with the rare earth metal ion (II) via the two or more kinds of different hetero-atoms.

At least two hetero-atoms contained in the functional group Y of the fluorine-containing polymer (I) having functional group are preferably those which have an ability of forming a complex having a structure of any of four-membered, five-membered or six-membered ring via the rare earth metal ion (II), thereby making it possible to form a stable structure with the rare earth metal ion (II).

Namely, according to the present invention, the complex-forming reaction is easily advanced in a solution, for example, between the rare earth metal salt and the molecule of the fluorine-containing polymer (I) having functional group, and thus a stable complex structure, in which the rare earth metal ion (II) and the fluorine-containing polymer (I) having functional group are highly dispersed, can be formed. The resin composition is used preferably for optical application since excellent characteristics, for example, intensity of light amplification, intensity of luminescence, luminescence life time, quantum yield and the like can be provided.

It is preferable that the functional group Y in the fluorine-containing polymer (I) having functional group contains a structure of:

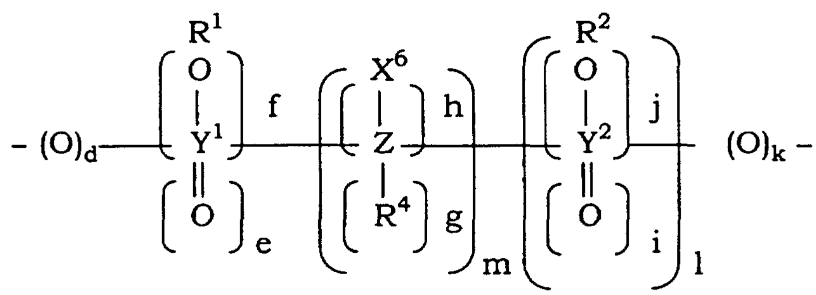

wherein d, f, g, h, j, k, l and m are the same or different and each is 0 or 1; e and i are the same or different and each is 1 or 2; $Y^1$ and $Y^2$ are independent and each is an atom selected from the group consisting of elements of the group 14, the group 15 excluding nitrogen and the group 16 excluding oxygen; Z is an atom of C, N, O, P, As, Sb or Bi; when Z is C atom, g and h are 1; when Z is O atom, g and h are 0; when Z is O atom and l is 0, k is 0; $X^6$ is an atom selected from H, D and halogen atoms; $R^1$ and $R^2$ are the same or different and each is an atom of H or D, a hydrocarbon group having 1 to 20 carbon atoms or a hydrocarbon group having 1 to 20 carbon atoms in which a part or the whole of hydrogen atoms are substituted with heavy hydrogen or halogen atoms; $R^4$ is H, D, halogen atom, a hydrocarbon group having 1 to 20 carbon atoms or a hydrocarbon group having 1 to 20 carbon atoms in which a part or the whole of hydrogen atoms are substituted with heavy hydrogen or halogen atoms; when $Y^1$ is S atom, either of m or l is 1;

when $Y^1$ is C atom, e is 1 and f is 0; when $Y^2$ is C atom, i is 1 and j is 0; when f is 1, e is 1; when j is 1, i is 1; $Y^1$, Z and $Y^2$ of the functional group Y are not carbon atoms at the same time, and at least one of $Y^1$, Z and $Y^2$ is a hetero-atom other than oxygen.

The two or more kinds of different hetero-atoms are represented by $Y^1$, $Y^2$ and Z in the above-mentioned formula, namely when two kinds out of $Y^1$, $Y^2$ and Z are contained, it is a matter of course that they are selected from different atoms, respectively. When three kinds of hetero-atoms are contained, they are selected so that $Y^1$, $Y^2$ and Z are not the same atom at the same time.

The first example of the functional group Y in the fluorine-containing polymer (I) having functional group is preferably one containing a structure of the following formula:

$$-Y^3(=O)_n-NX^7-Y^4(=O)_o-$$

wherein n and o are the same or different and each is 1 or 2; $Y^3$ and $Y^4$ are independent and each is C atom or S atom; $X^7$ is H, D or halogen atom; when $Y^3$ is C atom, n is 1 and when $Y^4$ is C atom, o is 1.

Concretely there are preferably those containing a structure of:

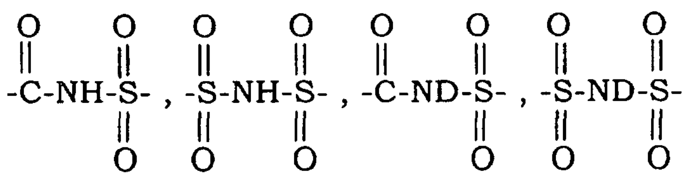

or the like.

The second example of the functional group Y is one containing a structure of the following formula:

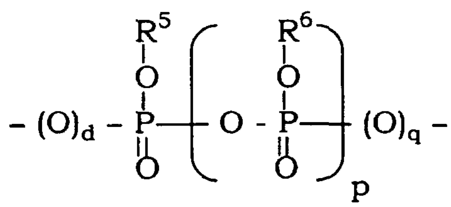

wherein d and q are the same or different and each is 0 or 1; p is 0 or an integer of 1 to 20; $R^5$ and $R^6$ are the same or different and each is H, D, halogen atom, a hydrocarbon group having 1 to 20 carbon atoms or a hydrocarbon group having 1 to 20 carbon atoms in which a part or the whole of hydrogen atoms are substituted with heavy hydrogen or halogen atoms.

Concretely there are preferably those containing a structure of:

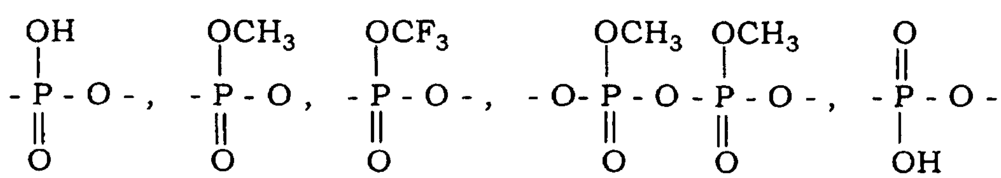

or the like.

The third example of the functional group Y is one containing a structure of the following formula:

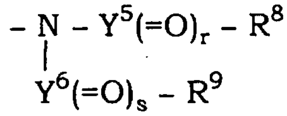

wherein r and s are the same or different and each is 1 or 2; $Y^5$ and $Y^6$ are independent and each is C atom or S atom and when $Y^5$ is C atom, r is 1 and when $Y^6$ is C atom, s is 1; $R^8$ and $R^9$ are the same or different and each is H, D, halogen atom, a hydrocarbon group having 1 to 20 carbon atoms or a hydrocarbon group having 1 to 20 carbon atoms in which a part or the whole of hydrogen atoms are substituted with heavy hydrogen or halogen atoms.

Concretely there are preferably those containing a structure of:

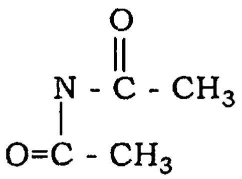 , 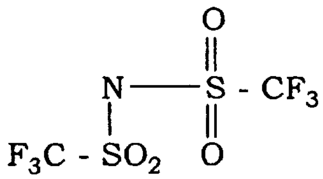 , 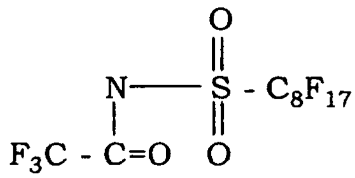

or the like.

Preferred examples of the other functional group Y are those containing a structure of:

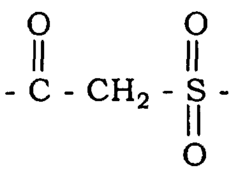 , 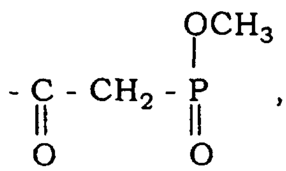 , 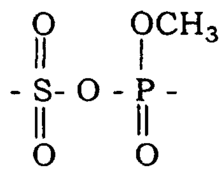 ,

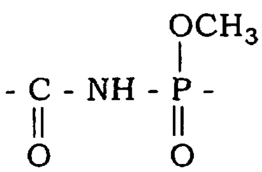 , 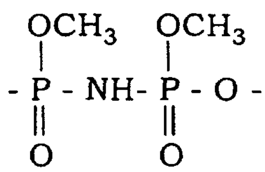

or the like. Those functional groups are preferred examples from the point that they have an ability of forming a good coordinate bond (forming a complex) with the rare earth metal ion (II).

On the other hand, $-SO_3H$ group, -COOH group and the like which can be used as the functional group are not preferred because they do not have an ability of forming a good coordinate bond (forming a complex) with the rare earth metal ion (II) only by use of them.

The fluorine-containing polymer (I) having functional group which is used for the fluorine-containing resin composition of the present invention is, as mentioned above, the fluorine-containing polymer represented by the formula (1):

$$\{M\}\{A\} \quad (1)$$

in which the structural unit M is the structural unit derived from the fluorine-containing ethylenic monomer and represented by the formula (2):

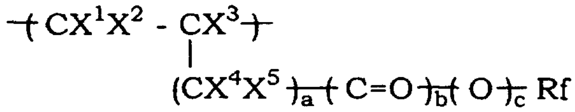

(2)

wherein $X^1$ and $X^2$ are the same or different and each is H or F; $X^3$ is H, F, $CH_3$ or $CF_3$; $X^4$ and $X^5$ are the same or different and each is H, F or $CF_3$; Rf is a monovalent organic group forming a side chain of the polymer and having at least one functional group Y in the side chain or at an end of the side chain, in which the functional group Y comprises two or more kinds of different hetero-atoms selected from elements of the groups 14, 15 and 16; a is 0 or an integer of from 1 to 3; b and c are the same or different and each is 0 or 1, and coordinate bond can be formed with the rare earth metal ion (II) via the two or more kinds of different hetero-atoms in the functional group Y,

the structural unit A is a structural unit derived from a monomer copolymerizable with the monomer for the structural unit M,

and the structural unit M and the structural unit A are contained in amounts of from 0.1 to 100 % by mole and from 0 to 99.9 % by mole, respectively.

Namely, the fluorine-containing polymer is a homopolymer of the structural unit M which is derived from a fluorine-containing ethylenic monomer and characterized by being capable of forming a rare earth complex of a four-membered, five-membered or six-membered ring in combination of at least two hetero-atoms in Rf of the side chain and the rare earth metal ion, or a copolymer comprising the structural unit M derived from the fluorine-containing ethylenic monomer as essential component.

In the present invention, the structural unit M of the fluorine-containing polymer (I) having functional group of the formula (1) is preferably the structural unit M1 derived from the fluorine-containing ethylenic monomer and represented by the formula (3):

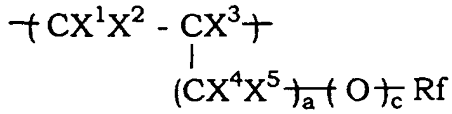

(3)

wherein $X^1$, $X^2$, $X^3$, $X^4$, $X^5$, Rf, a and c are as defined above.

The polymer having the structural unit M 1 is preferred since transparency particularly in a near infrared region (hereinafter in some cases referred to as "near infrared transparency") is high and in case of not only a homopolymer consisting of the structural unit M 1 but also a copolymer containing an increased amount of the structural unit M1, near infrared transparency can be made high.

Further example of the more preferred structural unit M 1 is the structural unit M2 derived from the fluorine-containing ethylenic monomer and represented by the formula (4):

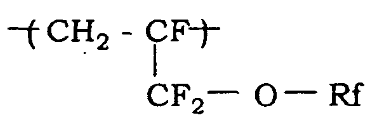

(4)

wherein Rf is as defined above.

The structural unit M2 is a structural unit derived from a fluorine-containing allyl ether and having at least two hetero-atoms and is preferred since not only near infrared transparency can be made high but also its polymerizability is good, particularly homopolymerizability and copolymerizability with other fluorine-containing ethylenic monomers are good.

Also another example of the preferred structural unit M 1 is the structural unit M3 derived from the fluorine-containing ethylenic monomer and represented by the formula (5):

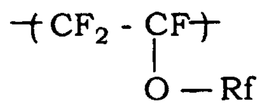

(5)

wherein Rf is as defined above.

The structural unit M3 is a structural unit derived from a fluorine-containing vinyl ether and having at least two hetero-atoms and is preferred since near infrared transparency can be made high and also copolymerizability with other fluorine-containing ethylenic monomers is good.

In the fluorine-containing polymer (I) having functional group of the formula (1) which is used in the present invention, as mentioned above, Rf contained in the structural unit M, M 1, M2 and M3 has at least two hetero-atoms and is a fluorine-containing alkylene group having 1 to 50 carbon atoms or a fluorine-containing alkylene group having 2 to 100 carbon atoms and ether bond.

At least two hetero-atoms contained in the functional group Y in -Rf are preferably those having an ability of forming a complex having a structure of any of four-membered, five-membered or six-membered ring via the rare earth metal ion (II), thereby making it possible to obtain a stable structure with the rare earth metal ion (II).

Namely, according to the present invention, the complex-forming reaction is easily advanced in a solution, for example, between the rare earth metal salt and the molecule of the fluorine-containing polymer (I) having functional group, and thus a stable complex structure, in which the rare earth metal ion (II) and the fluorine-containing polymer (I) having functional group are highly dispersed, can be formed. The resin composition is used preferably for optical application since excellent characteristics, for example, intensity of light amplification, intensity of luminescence, luminescence life time and the like can be provided.

Example of Rf in the formulae (2), (3), (4) and (5) is preferably:

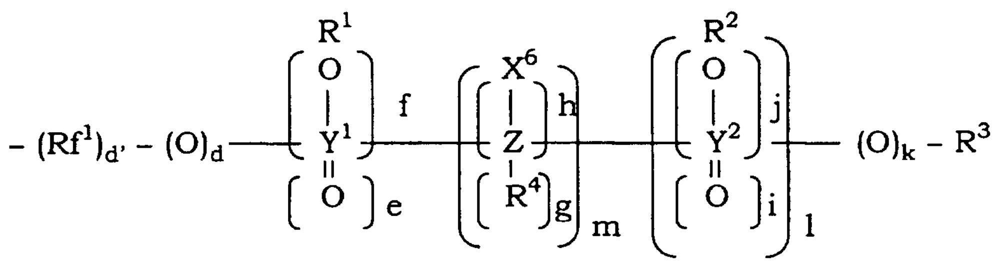

in which d, d', f, g, h, j, k, l and m are the same or different and each is 0 or 1; e and i are the same or different and each is 1 or 2; $Y^1$ and $Y^2$ are independent and each is an atom selected from the group consisting of elements of the group 14, the group 15 excluding nitrogen and the group 16 excluding oxygen; Z is an atom of C, N, O, P, As, Sb or Bi and when Z is C atom, g and h are 1, when Z is O atom, g and h are 0 and when Z is O atom and l is 0, k is 0; $X^6$ is an atom selected from H, D and halogen atoms; $R^1$ and $R^2$ are the same or different and each is an atom of H or D, a hydrocarbon group having 1 to 20 carbon atoms or a hydrocarbon group having 1 to 20 carbon atoms in which a part or the whole of hydrogen atoms are substituted with heavy hydrogen or halogen atoms; $R^3$ and $R^4$ are the same or different and each is H, D, halogen atom, a hydrocarbon group having 1 to 20 carbon atoms or a hydrocarbon group having 1 to 20 carbon atoms in which a part or the whole of hydrogen atoms are substituted with heavy hydrogen or halogen atoms; $Rf^1$ is a fluorine-containing alkylene group having 1 to 50, preferably 1 to 48 carbon atoms or a fluorine-containing alkylene group having 2 to 100, preferably 2 to 98 carbon atoms and ether bond; when $Y^1$ is S atom, either of m or l is 1; when $Y^1$ is C atom, e is 1 and f is 0; when $Y^2$ is C atom, i is 1 and j is 0; when f is 1, e is 1; when j is 1, i is 1; $Y^1$, Z and $Y^2$ of the functional group Y are not carbon atoms at the same time, and at least one of $Y^1$, Z and $Y^2$ is a hetero-atom other than oxygen.

The first preferred example of -Rf in the formulae (2), (3), (4) and (5) is:

$$-(Rf^2)_{d'}-Y^3(=O)_n-NX^7-Y^4(=O)_o-R^4$$

wherein d' is 0 or 1; n and o are the same or different and each is 1 or 2; $Y^3$ and $Y^4$ are independent and each is C atom or S atom; $X^7$ is H, D or halogen atom; when $Y^3$ is C atom, n is 1; when $Y^4$ is C atom, o is 1; $Rf^2$ is a fluorine-containing alkylene group having 1 to 50, preferably 1 to 48 carbon atoms or a fluorine-containing alkylene group

having 2 to 100, preferably 2 to 98 carbon atoms and ether bond; $R^4$ is H, D, halogen atom, a hydrocarbon group having 1 to 20 carbon atoms or a hydrocarbon group having 1 to 20 carbon atoms in which a part or the whole of hydrogen atoms are substituted with heavy hydrogen or halogen atoms.

Concretely there are preferably:

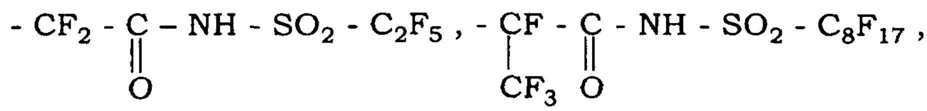

$-SO_2-NH-SO_2-C_2F_5$, $-SO_2-NH-SO_2-C_8F_{17}$,

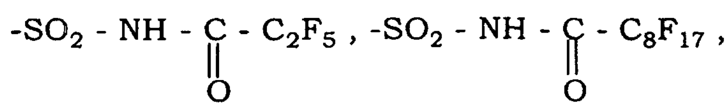

and the like.

The second preferred example of -Rf is:

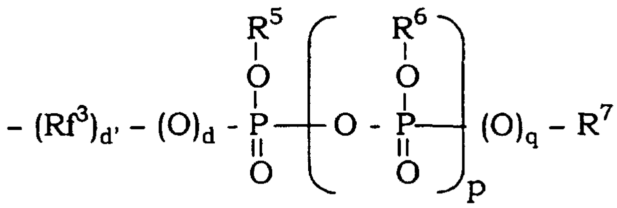

wherein d and d' are the same or different and each is 0 or 1; p is 0 or an integer of 1 to 20; q is 0 or 1; $Rf^3$ is a fluorine-containing alkylene group having 1 to 50, preferably 1 to 48 carbon atoms or a fluorine-containing alkylene group having 2 to 100, preferably 2 to 98 carbon atoms and ether bond; $R^5$, $R^6$ and $R^7$ are the same or different and each is H, D, halogen atom, a hydrocarbon group having 1 to 20 carbon atoms or a hydrocarbon group having 1 to 20 carbon atoms in which a part or the whole of hydrogen atoms are substituted with heavy hydrogen or halogen atoms.

Concretely there are preferably:

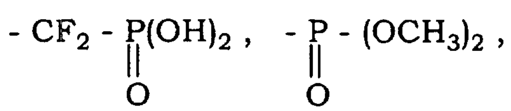

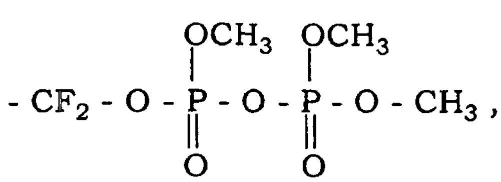

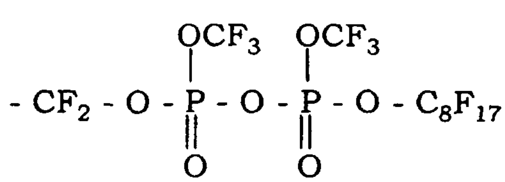

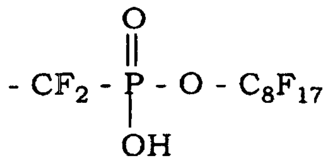

and the like.

The third preferred example of -Rf is:

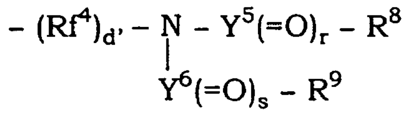

wherein d' is 0 or 1; r and s are the same or different and each is 1 or 2; $Y^5$ and $Y^6$ are independent and each is C atom or S atom and when $Y^5$ is C atom, r is 1 and when $Y^6$ is C atom, s is 1; $Rf^4$ is a fluorine-containing alkylene group having 1 to 50, preferably 1 to 48 carbon atoms or a fluorine-containing alkylene group having 2 to 100, preferably 2 to 98 carbon atoms and ether bond; $R^8$ and $R^9$ are the same or different and each is H, D, halogen atom, a hydrocarbon group having 1 to 20 carbon atoms or a hydrocarbon group having 1 to 20 carbon atoms in which a part or the whole of hydrogen atoms are substituted with heavy hydrogen or halogen atoms.

Concretely there are:

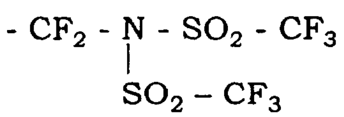 , 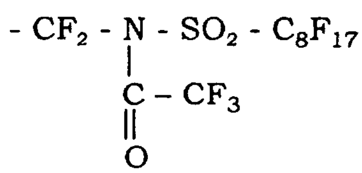 , 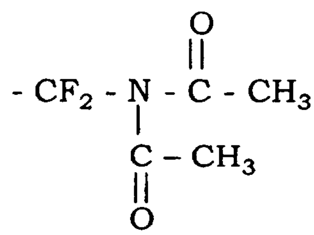

and the like.

Other examples of -Rf are:

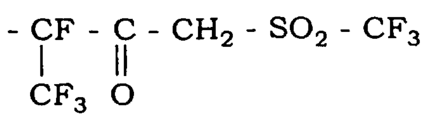 , 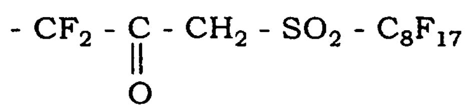 ,

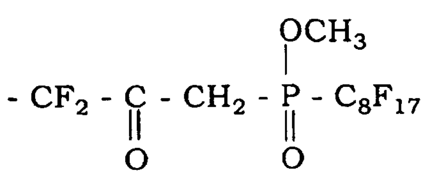 , 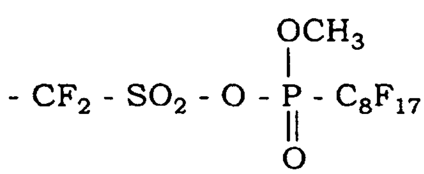

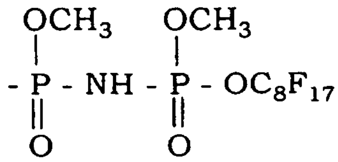 , 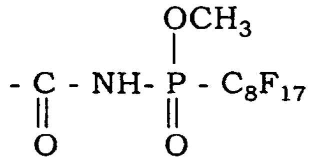

and the like.

In the fluorine-containing polymer (I) having functional group of the formula (1) of the present invention, -Rf[1]-, -Rf[2]-, -Rf[3]- and -Rf[4]- may be contained (d' = 1) or may not be contained (d' = 0) in -Rf of the structural units M, M 1, M2 and M3. When d' is 1, -Rf[1]-, -Rf[2]-, -Rf[3]- and -Rf[4]- (hereinafter collectively referred to as "Rf$^n$ group") are fluorine-containing alkylene groups having 1 to 50, preferably 1 to 48 carbon atoms or fluorine-containing alkylene groups having 2 to 100, preferably 2 to 98 carbon atoms and ether bond. In the Rf$^n$ group, fluorine atom is bonded to carbon atom. Generally the Rf$^n$ group is a fluorine-containing alkylene group or a fluorine-containing alkylene group having ether bond, in which fluorine atom and hydrogen atom or chlorine atom are bonded to carbon atom. It is preferable that more fluorine atoms are contained (a high fluorine content). The fluorine content is not less than 50 %, preferably not less than 70 % based on the molecular weight of the Rf$^n$ group excluding oxygen atoms, and the Rf$^n$ group is more preferably a perfluoroalkylene group or a perfluoroalkylene group having ether bond. Accordingly near infrared transparency of the fluorine-containing polymer (I) having functional group can be increased, and particularly even when the content of functional groups is increased to increase the content of rare earth metal ion (II), a high near infrared transparency of the polymer can be maintained, which is preferred.

Too large number of carbon atoms of the Rf$^n$ group is not preferred because in the case of the fluorine-containing alkylene group, there is a case where solubility in a solvent of the fluorine-containing polymer (I) having functional group is lowered and in the case of the fluorine-containing alkylene group having ether bond, there is a case where a glass transition temperature and mechanical properties of the fluorine-containing polymer (I) having functional group and the cured article obtained therefrom are lowered. The number of carbon atoms of the fluorine-containing alkylene group is preferably from 1 to 20, more preferably from 1 to 10, and the number of carbon atoms of the fluorine-containing alkylene group having ether bond is preferably from 2 to 30, more preferably from 2 to 20.

Examples of preferred Rf$^n$ are:

$-(CF_2)_m(CH_2)_n$ , 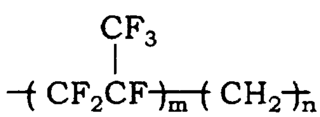 , $-(CH_2CF_2)_m(CH_2)_n$ ,

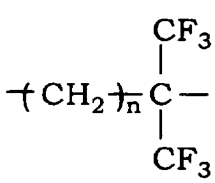 , 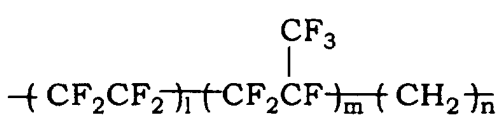 ,

$-(CF_2CF_2)_l(CH_2CF_2)_m(CH_2)_n$ ,

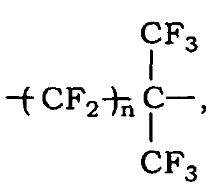 , 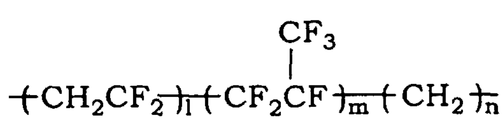 ,

(1: an integer of from 1 to 10, m: an integer of from 1 to 10, n: 0 or an integer of from 1 to 5)

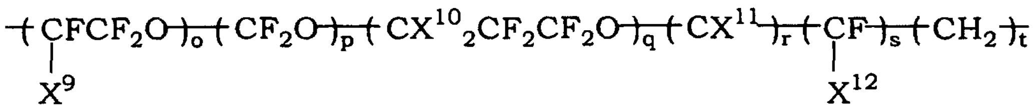

,

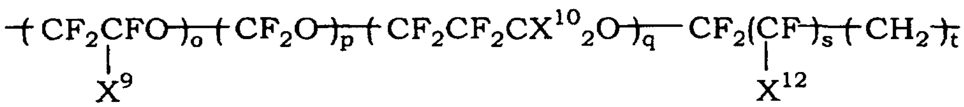

,

($X^9$ and $X^{12}$ are F or $CF_3$; $X^{10}$ and $X^{11}$ are H or F; o + p + q is an integer of from 1 to 30; r is 0 or 1; s and t are 0 or 1) and the like.

As mentioned above, the structural unit M constituting the fluorine-containing polymer (I) having functional group of the present invention is preferably the structural unit M 1, and further the structural unit M1 is preferably the structural units M2 and M3. Next, mentioned below are examples of the structural units M2 and M3.

Examples of the preferred monomers providing the structural unit M2 are as follows when the moiety containing at least two hetero-atoms (for example, from the first to the third Rf mentioned above) is represented by Rf':

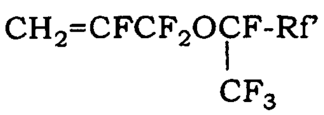 , 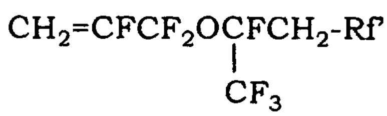 ,

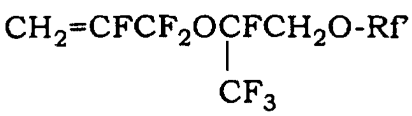 , 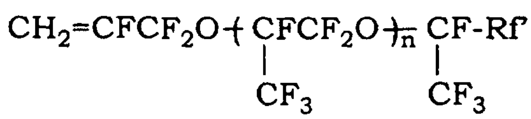 ,

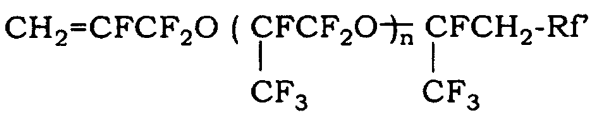 ,

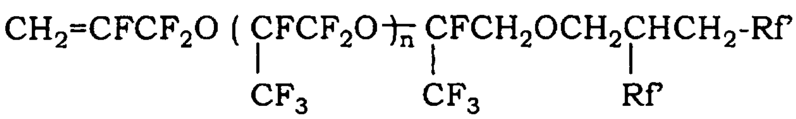 ,

$CH_2=CFCF_2O(CF_2CF_2O)_nCF_2-Rf'$ ,

$CH_2=CFCF_2O(CF_2CF_2O)_nCF_2CH_2-Rf'$ ,

$CH_2=CFCF_2O(CF_2CF_2CF_2O)_nCF_2CF_2-Rf'$ ,

$CH_2=CFCF_2O(CF_2CF_2CF_2O)_nCF_2CF_2CH_2-Rf'$ ,

$$CH_2=CFCF_2O(CH_2CF_2CF_2O)_n CH_2CF_2\text{-}Rf' ,$$

$$CH_2=CFCF_2O(CH_2CF_2CF_2O)_n CH_2CF_2CH_2\text{-}Rf' ,$$

$$CH_2=CFCF_2O(CF_2CF_2)_n Rf' \text{ and}$$

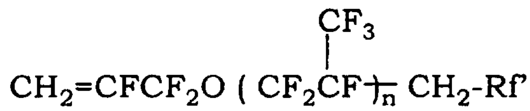

wherein n is an integer of from 1 to 30.

More concretely there are:

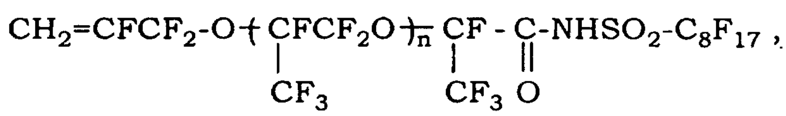

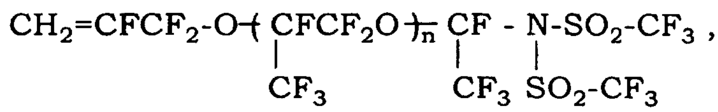

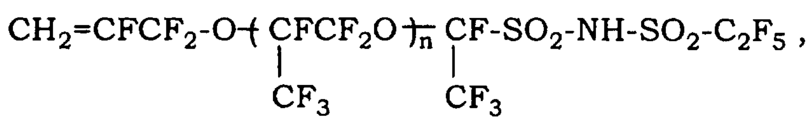

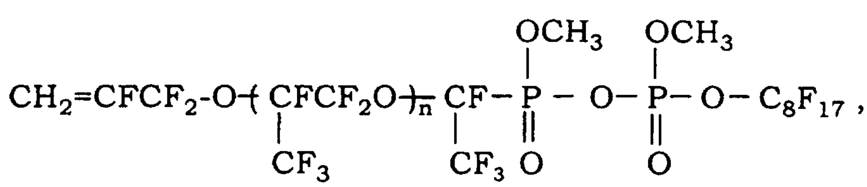

(n is 0 or an integer of from 1 to 30)
and the like.

Examples of the preferred monomer providing the structural unit M3 are as follows when the moiety containing at least two hetero-atoms is represented by Rf:

$CF_2=CFOCF_2CF_2\text{-}Rf'$, $CF_2=CFOCF_2CF_2CH_2\text{-}Rf'$,

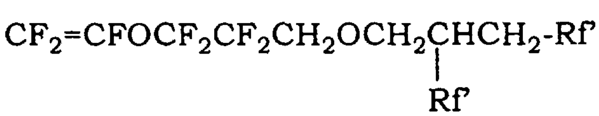 , 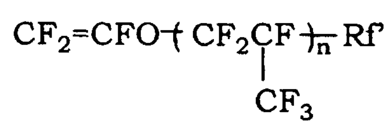 ,

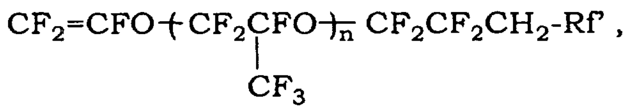

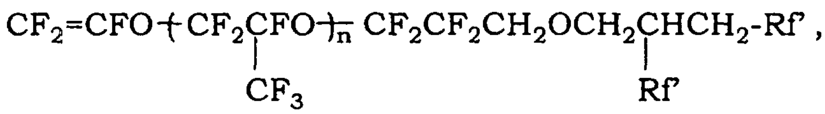

(n is an integer of from 1 to 30)

$CF_2=CFO(CF_2)_3Rf'$, $CF_2=CFO(CF_2)_3CH_2-Rf'$,

$CF_2=CFO(CF_2)_3$ Rf, $CF_2=CFO(CF_2)_3CH_2-Rf'$,

$CF_2=CFOCF_2CF_2OCF_2-Rf'$, $CF_2=CFOCF_2CF_2OCF_2CH_2-Rf'$,

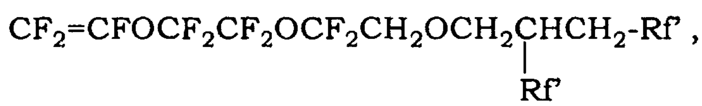

$CF_2=CFOCF_2CF_2CH_2OCF_2CF_2-Rf'$,

$CF_2=CFOCF_2CF_2CH_2OCF_2CF_2CH_2-Rf'$

and the like.

More concretely there are:

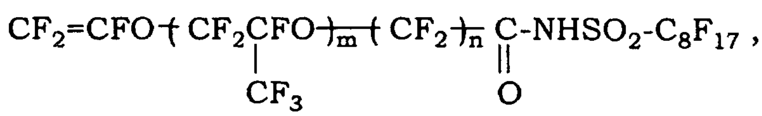

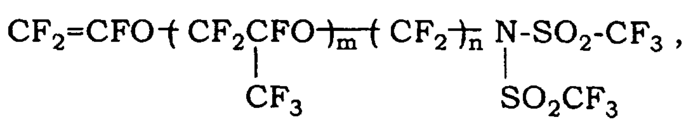

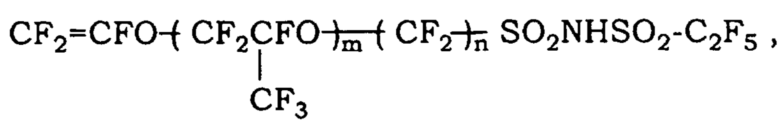

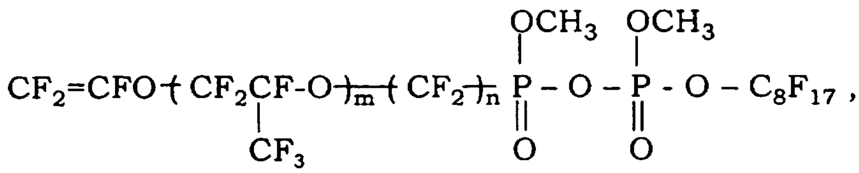

(m is 0 or an integer of from 1 to 30; n is an integer of from 1 to 3)
and the like.

Examples of the preferred monomer for the structural unit M of the fluorine-containing polymer (I) having functional group other than the above-mentioned structural units M2 and M3 are, for instance, as follows when the moiety containing at least two hetero-atoms (for example, the above-mentioned first to third Rf) is represented by Rf':

$CF_2$=$CFCF_2$-O-$Rf^n$-Rf' , 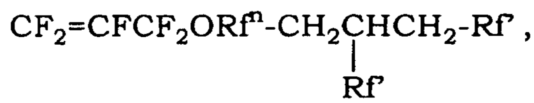

$CF_2$=CF-$Rf^n$-Rf' , 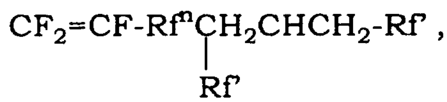

$CH_2$=CH-$Rf^n$-Rf' , 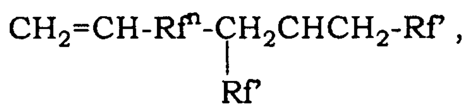

$CH_2$=CHO-$Rf^n$-Rf' , 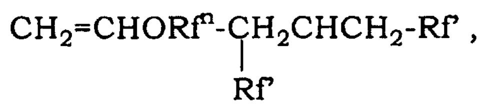

and the like wherein $Rf^n$ is as defined above.

More concretely there are:

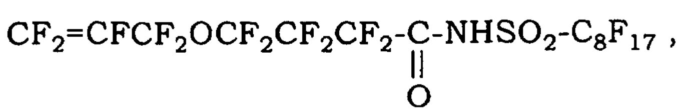

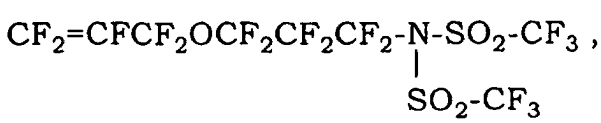 , 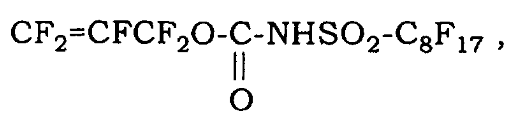

$CH_2$=$CHCF_2CF_2$-$SO_2NHSO_2$-$C_2F_5$,

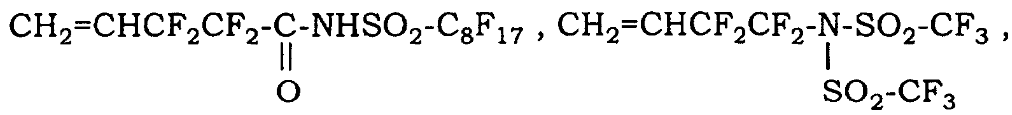

and the like.

In the fluorine-containing polymer (I) having functional group of the present invention, the structural unit A is an optional component. The monomer for the structural unit A is not limited particularly as far as it is a monomer copolymerizable with the monomers for the structural units M, M1, M2 and M3. The monomer may be optionally selected depending on intended characteristics required of the fluorine-containing polymer (I) having functional group.

Examples of the structural unit A are, for instance, the following structural units.

(i) Structural units which are derived from fluorine-containing ethylenic monomers having functional group and do not have at least two hetero-atoms in the structural unit

These structural units are preferred from the point that adhesion to a substrate and solubility in a solvent, particularly in a general-purpose solvent can be imparted to the fluorine-containing polymer (I) having functional group and the composition obtained therefrom while maintaining a high near infrared transparency, and are also preferred from the point that other functions such as crosslinkability can be imparted. Preferred structural unit of the fluorine-containing ethylenic monomer having functional group is a structural unit represented by the formula (6):

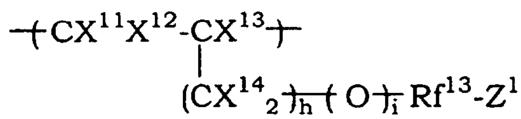

(6)

wherein $X^{11}$, $X^{12}$ and $X^{13}$ are the same or different and each is H or F; $X^{14}$ is H, F or $CF_3$; h is 0, 1 or 2; i is 0 or 1; $Rf^{13}$ is a fluorine-containing alkylene group having 1 to 40 carbon atoms or a fluorine-containing alkylene group having 2 to 100 carbon atoms and ether bond; $Z^1$ is at least one selected from -OH, $-CH_2OH$, epoxy and cyano, and particularly preferred is a structural unit derived from:

$$CH_2=CFCF_2ORf^{13}-Z^1$$

wherein $Rf^{13}$ and $Z^1$ are as defined above.

More concretely there are preferably structural units derived from fluorine-containing ethylenic monomers such as:

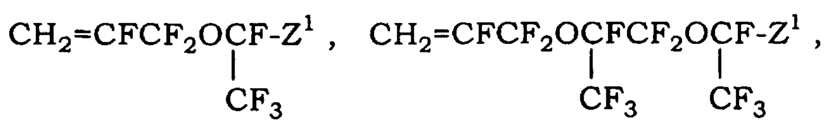

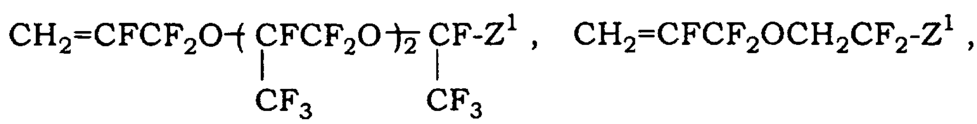

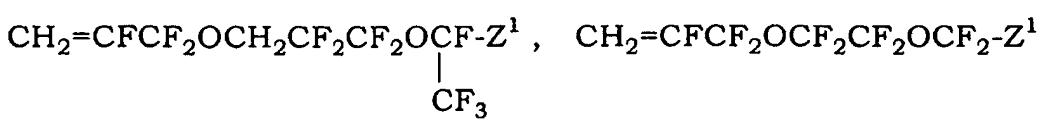

and $CH_2=CFCF_2O(CF_2CF_2O)_2CF_2\text{-}Z^1$

wherein $Z^1$ is as defined above.

Also there is a preferred structural unit derived from:

$$CF_2=CFORf^{13}\text{-}Z^1$$

wherein $Rf^{13}$ and $Z^1$ are as defined above. More concretely there are structural units derived from monomers such as:

$CF_2=CFOCF_2CF_2\text{-}Z^1$, $CF_2=CFOCF_2CF_2CH_2\text{-}Z^1$,

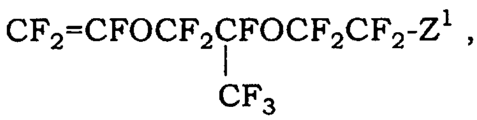 , 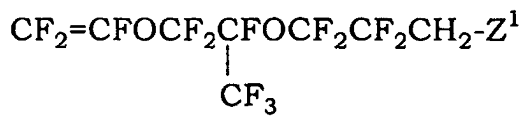 ,

$CF_2=CFO(CF_2)_3Z^1$, $CF_2=CFO(CF_2)_3CH_2\text{-}Z^1$,

$CF_2=CFOCF_2CF_2OCF_2\text{-}Z^1$, $CF_2=CFOCF_2CF_2OCF_2CH_2\text{-}Z^1$,

$CF_2=CFOCF_2CF_2CH_2OCF_2CF_2\text{-}Z^1$

and

$CF_2=CFOCF_2CF_2CH_2OCF_2CF_2CH_2\text{-}Z^1$,

wherein $Z^1$ is as defined above.

Examples of the other fluorine-containing ethylenic monomer having functional group are:

$CF_2=CFCF_2\text{-}O\text{-}Rf^{20}\text{-}Z^1$, $CF_2=CF\text{-}Rf^{20}\text{-}Z^1$,

$CH_2=CH\text{-}Rf^{20}\text{-}Z^1$, $CH_2=CHO\text{-}Rf^{20}\text{-}Z^1$

and the like, wherein $Z^1$ is as defined above; $Rf^{20}$ is a fluorine-containing alkylene group having 1 to 40 carbon atoms or a fluorine-containing alkylene group having 2 to 100 carbon atoms and ether bond. More concretely there are:

$CF_2=CFCF_2OCF_2CF_2CF_2\text{-}Z^1$, $CF_2=CFCF_2OCF_2CF_2CF_2CH_2\text{-}Z^1$,

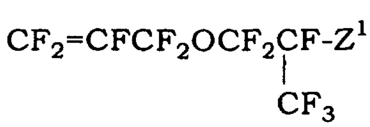 , 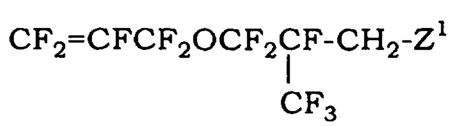 ,

$CF_2=CFCF_2\text{-}Z^1$, $CF_2=CFCF_2CH_2\text{-}Z^1$,

$CH_2=CHCF_2OF_2CH_2CH_2\text{-}Z^1$, $CH_2=CHCF_2CF_2\text{-}Z^1$,

$CH_2=CHCF_2CF_2CH_2\text{-}Z^1$, $CH_2=CHCF_2CF_2CF_2CF_2\text{-}Z^1$,

$CH_2=CHCF_2CF_2CF_2CF_2CH_2\text{-}Z^1$, $CH_2=CHO\text{-}CH_2CF_2CF_2\text{-}Z^1$,

$CH_2=CHOCH_2CF_2CF_2CH_2\text{-}Z^1$

and the like, wherein $Z^1$ is as defined above.

(ii) Structural units derived from fluorine-containing ethylenic monomers having no functional group

These structural units are preferred from the point that a low refractive index of the fluorine-containing polymer having functional group and a cured article obtained therefrom can be maintained and also from the point that a refractive index can be further decreased. Also these structural units are preferred from the point that by selecting the monomer, mechanical properties and glass transition temperature of the polymer can be adjusted, particularly the glass transition temperature can be increased by copolymerization with the structural unit M.

Examples of the preferred structural units (ii) of the fluorine-containing ethylenic monomer are those represented by the formula (7):

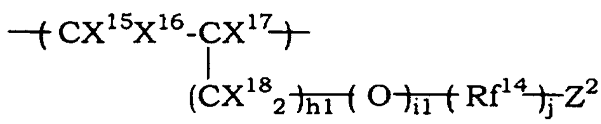

(7)

wherein $X^{15}$, $X^{16}$ and $X^{18}$ are the same or different and each is H or F; $X^{17}$ is H, F or $CF_3$; h1, i1 and j are the same or different and each is 0 or 1; $Z^2$ is H, F or Cl; $Rf^{14}$ is a fluorine-containing alkylene group having 1 to 20 carbon atoms or a fluorine-containing alkylene group having 2 to 100 carbon atoms and ether bond.

Examples thereof are preferably structural units derived from monomers such as:

$CF_2=CF_2$, $CF_2=CH_2$, $CF_2=CFCl$, $CF_2=CFCF_3$,

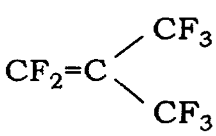 , $CF_2=CFO(CF_2)_nF$ (n: from 1 to 5), $CH_2=C(CF_3)_2$ ,

$CF_2=CFH$ , $CF_2=CCl_2$ , 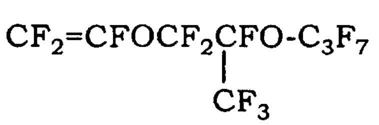 ,

$CH_2=CF(CF_2)_nZ^2$ ($Z^2$ is as defined in the formula (7), n: from 1 to 10) and
$CH_2=CHOCH_2(CF_2)_nZ^2$ ($Z^2$ is as defined in the formula (7), n: from 1 to 10)

(iii) Fluorine-containing aliphatic ring structural units

Introduction of these structural units (iii) is preferred since transparency can be increased, a further lower refractive index can be obtained and further the fluorine-containing polymer having functional group which has a high

glass transition temperature can be obtained.

Examples of the preferred fluorine-containing aliphatic ring structural unit (iii) are those represented by the formula (8):

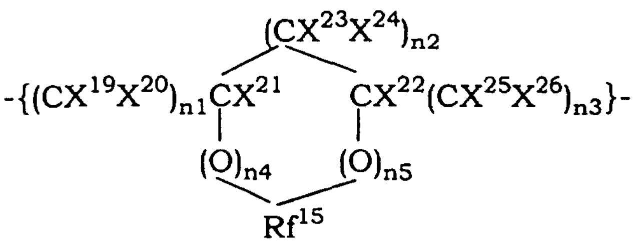 (8)

wherein $X^{19}$, $X^{20}$, $X^{23}$, $X^{24}$, $X^{25}$ and $X^{26}$ are the same or different and each is H or F; $X^{21}$ and $X^{22}$ are the same or different and each is H, F, Cl or $CF_3$; $Rf^{15}$ is a fluorine-containing alkylene group having 1 to 10 carbon atoms or a fluorine-containing alkylene group having 2 to 10 carbon atoms and ether bond; n2 is 0 or an integer of from 1 to 3; n1, n3, n4 and n5 are the same or different and each is 0 or 1.

For example, there are structural units represented by:

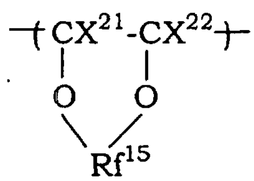

wherein $Rf^{15}$, $X^{21}$ and $X^{22}$ are as defined above.

Concretely there are:

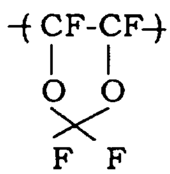 , 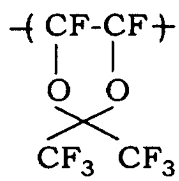 , 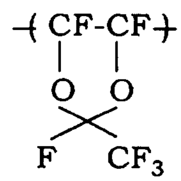 ,

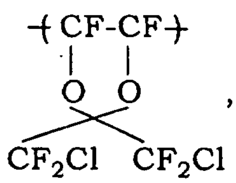 , 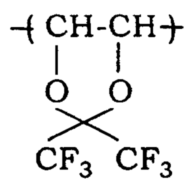 , 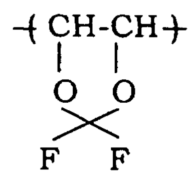 ,

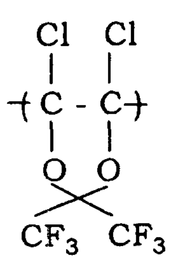 , 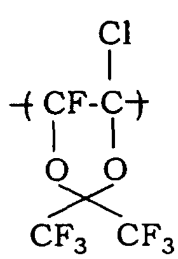 , 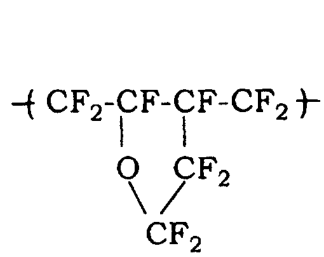 ,

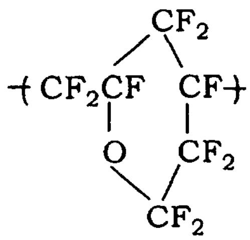 , 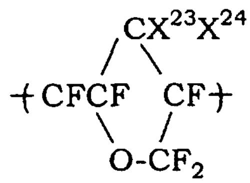 ,

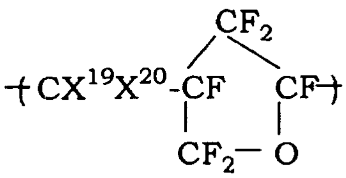 , 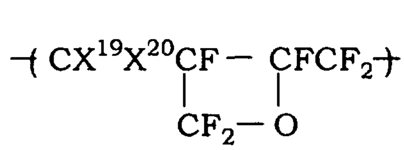 ,

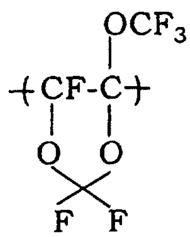 , 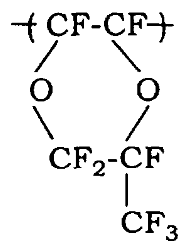

and the like wherein $X^{19}$, $X^{20}$, $X^{23}$ and $X^{24}$ are as defined above.

Examples of the other fluorine-containing aliphatic ring structural unit are, for instance,

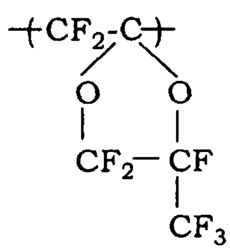

and the like.

(iv) Structural units derived from ethylenic monomers having no fluorine

The structural units (iv) derived from ethylenic monomers having no fluorine may be introduced to the polymer within a range of not having an adverse effect on a refractive index (not increasing a refractive index).

The introduction of these structural units is preferred since solubility in a general-purpose solvent is enhanced and compatibility with additives, for example, a photocatalyst and a curing agent to be added as case demands can be improved.

Examples of the non-fluorine-containing ethylenic monomer are as follows.

α-Olefins:

Ethylene, propylene, butene, vinyl chloride, vinylidene chloride and the like.

Vinyl ether or vinyl ester monomers:

$CH_2$=CHOR, $CH_2$=CHOCOR (R: hydrocarbon group having 1 to 20 carbon atoms) and the like.

Allyl monomers:

$CH_2=CHCH_2Cl$, $CH_2=CHCH_2OH$, $CH_2=CHCH_2COOH$,

$CH_2=CHCH_2Br$

and the like.

Allyl ether monomers:

$CH_2=CHCH_2OR$

(R: hydrocarbon group having 1 to 20 carbon atoms),

$CH_2=CHCH_2OCH_2CH_2COOH$,

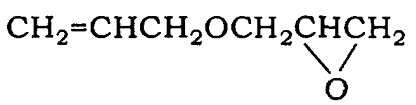 , 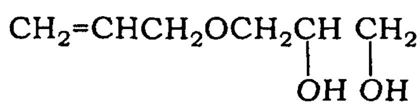

and the like.

Acrylic or methacrylic monomers:

There are acrylic acid, methacrylic acid, acrylic acid esters, methacrylic acid esters, maleic anhydride, maleic acid, maleic acid esters and the like. Monomers obtained by replacing a part or the whole of hydrogen atoms of the above-mentioned non-fluorine-containing ethylenic monomers with heavy hydrogen atoms are preferred from the viewpoint of near infrared transparency.

(v) Structural units derived from alicyclic monomers

A structural unit (v) of an alicyclic monomer may be introduced as a component copolymerizable with the structural unit M, more preferably as a third component in addition to the structural unit M and the structural unit of the above-mentioned fluorine-containing ethylenic monomer or non-fluorine-containing ethylenic monomer (the above-mentioned (iii) or (iv)), which is preferred since a glass transition temperature and hardness can be made high.
Examples of the alicyclic monomer (v) are norbornene derivatives represented by:

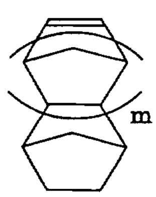

and

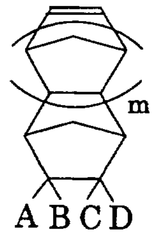

wherein m is 0 or an integer of from 1 to 3; A, B, C and D are the same or different and each is H, F, Cl, COOH, $CH_2OH$, a perfluoroalkyl group having 1 to 5 carbon atoms or the like, alicyclic monomers such as:

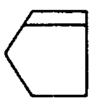 , 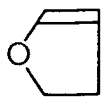 , 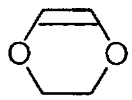 , 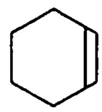 , 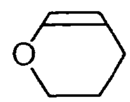 and 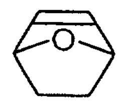

and derivatives thereof in which a substituent is introduced.

Among the fluorine-containing polymers (I) having functional group which are used for the composition of the present invention, the fluorine-containing polymer represented by the formula (20):

$$-(M)-(A)- \qquad (20)$$

in which the structural unit M is a structural unit derived from a fluorine-containing ethylenic monomer and represented by the formula (21):

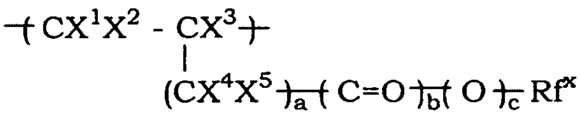

(21)

wherein $X^1$ and $X^2$ are the same or different and each is H or F; $X^3$ is H, F, $CH_3$ or $CF_3$; $X^4$ and $X^5$ are the same or different and each is H, F or $CF_3$; $Rf^x$ is a group represented by the formula (22), (23), (24) or (25) mentioned infra; a is 0 or an integer of from 1 to 3; b and c are the same or different and each is 0 or 1,
the structural unit A is a structural unit derived from a monomer copolymerizable with the monomer for the structural unit M,
and the structural unit M and the structural unit A are contained in amounts of from 0.1 to 100 % by mole and from 0 to 99.9 % by mole, respectively, is a novel polymer not disclosed in any literatures.

Examples of $Rf^x$ are as follows.
Formula (22):

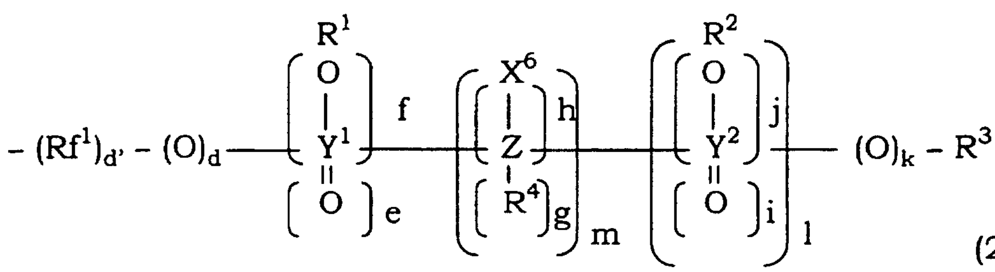

(22)

in which d', d, f, g, h, j, k, l and m are the same or different and each is 0 or 1; e and i are the same or different and each is 1 or 2; $Y^1$ and $Y^2$ are independent and each is an atom selected from the group consisting of elements of the group 14, the group 15 excluding nitrogen and the group 16 excluding oxygen; Z is an atom of C, N, O, P, As, Sb or Bi and when Z is C atom, g and h are 1, when Z is O atom, g and h are 0 and when Z is O atom and l is 0, k is 0; $X^6$ is an atom selected from H, D and halogen atoms; $R^1$ and $R^2$ are the same or different and each is an atom of H or D, a hydrocarbon group having 1 to 20 carbon atoms or a hydrocarbon group having 1 to 20 carbon atoms in which a part or the whole of hydrogen atoms are substituted with heavy hydrogen or halogen atoms; $R^3$ and $R^4$ are the same or different and each is H, D, halogen atom, a hydrocarbon group having 1 to 20 carbon atoms or a hydrocarbon group having 1 to 20 carbon atoms in which a part or the whole of hydrogen atoms are substituted with heavy hydrogen or halogen atoms; $Rf^1$ is a fluorine-containing alkylene group having 1 to 50, preferably 1 to 48 carbon atoms or a fluorine-containing alkylene group having 2 to 100, preferably 2 to 98 carbon atoms and ether bond; when $Y^1$ is S atom, either of m or l is 1; when $Y^1$ is C atom, e is 1 and f is 0; when $Y^2$ is C atom, i is 1 and j is 0; when f is 1, e is 1; when j is 1, i is 1; $Y^1$, Z and $Y^2$ of the functional group Y are not carbon atoms at the same time, and at least one of $Y^1$, Z and $Y^2$ is a hetero-atom other than oxygen.

Formula (23):

$$-(Rf^2)_{d'}-Y^3(=O)_n-NX^7-Y^4(=O)_o-R^4 \qquad (23)$$

wherein d' is 0 or 1; n and o are the same or different and each is 1 or 2; $Y^3$ and $Y^4$ are independent and each is C atom or S atom; $X^7$ is H, D or halogen atom; when $Y^3$ is C atom, n is 1; when $Y^4$ is C atom, o is 1; $Rf^2$ is a fluorine-containing alkylene group having 1 to 50, preferably 1 to 48 carbon atoms or a fluorine-containing alkylene group having 2 to 100, preferably 2 to 98 carbon atoms and ether bond; $R^4$ is H, D, halogen atom, a hydrocarbon group having 1 to 20 carbon atoms or a hydrocarbon group having 1 to 20 carbon atoms in which a part or the whole of hydrogen atoms are substituted with heavy hydrogen or halogen atoms.

Formula (24):

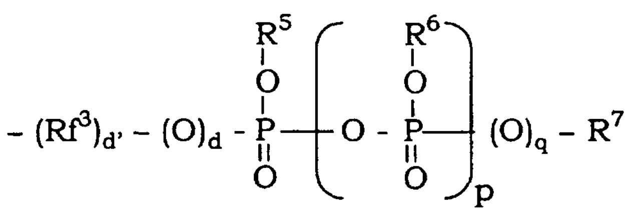

(24)

wherein d and d' are the same or different and each is 0 or 1; p is 0 or an integer of 1 to 20; q is 0 or 1; $Rf^3$ is a fluorine-containing alkylene group having 1 to 50, preferably 1 to 48 carbon atoms or a fluorine-containing alkylene group having 2 to 100, preferably 2 to 98 carbon atoms and ether bond; $R^5$, $R^6$ and $R^7$ are the same or different and each is H, D, halogen atom, a hydrocarbon group having 1 to 20 carbon atoms or a hydrocarbon group having 1 to 20 carbon atoms in which a part or the whole of hydrogen atoms are substituted with heavy hydrogen or halogen atoms.

Formula (25):

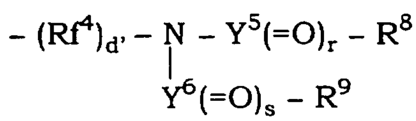

(25)

wherein d' is 0 or 1; r and s are the same or different and each is 1 or 2; $Y^5$ and $Y^6$ are independent and each is C atom or S atom and when $Y^5$ is C atom, r is 1 and when $Y^6$ is C atom, s is 1; $Rf^4$ is a fluorine-containing alkylene group having 1 to 50, preferably 1 to 48 carbon atoms or a fluorine-containing alkylene group having 2 to 100, preferably 2 to 98 carbon atoms and ether bond; $R^8$ and $R^9$ are the same or different and each is H, D, halogen atom, a hydrocarbon group having 1 to 20 carbon atoms or a hydrocarbon group having 1 to 20 carbon atoms in which a part or the whole of hydrogen atoms are substituted with heavy hydrogen or halogen atoms.

As the structural unit M in the formula (20), preferred are the structural units M1, M2 and M3 represented by

the following formulae (27), (28) and (29), respectively.

Structural unit M1 derived from a fluorine-containing ethylenic monomer and represented by the formula (27):

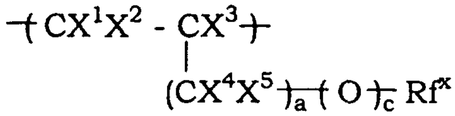

(27)

wherein $X^1$, $X^2$, $X^3$, $X^4$, $X^5$, $Rf^x$, a and c are as defined in the above-mentioned formula (21).

Structural unit M2 derived from a fluorine-containing ethylenic monomer and represented by the formula (28):

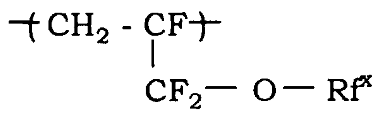

(28)

wherein $Rf^x$ is as defined above.

Structural unit M3 derived from a fluorine-containing ethylenic monomer and represented by the formula (29):

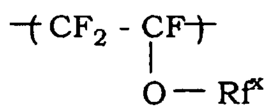

(29)

wherein $Rf^x$ is as defined above.

Non-limiting examples of the monomer providing the structural unit M in the formula (20) are those mentioned below though they overlap with the above-mentioned examples in the fluorine-containing polymer (I) having functional group.

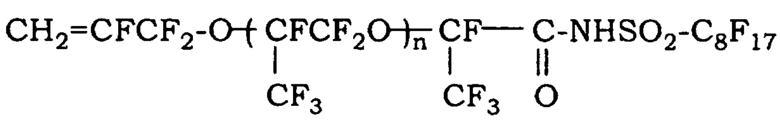

,

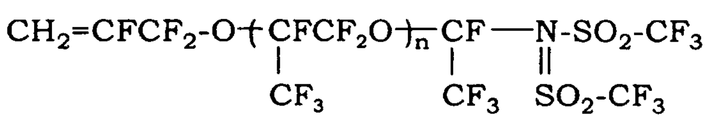

,

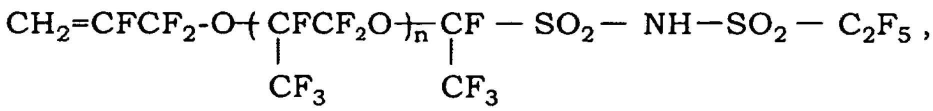

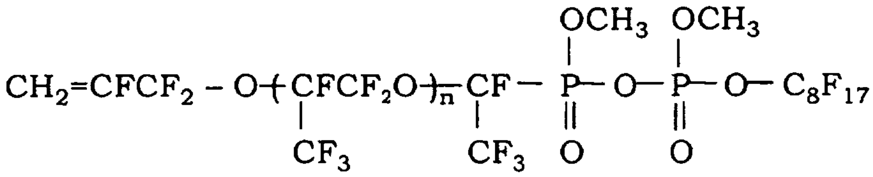

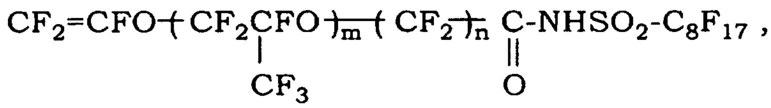

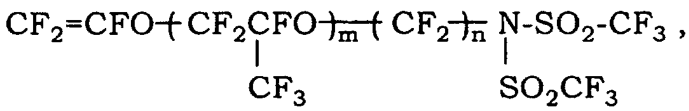

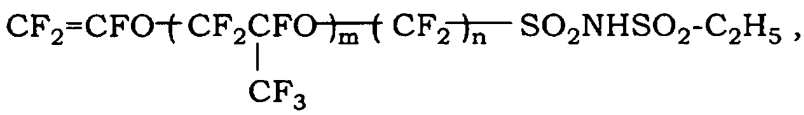

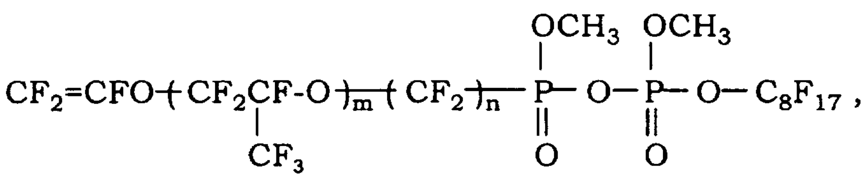

Also the fluorine-containing ethylenic monomer providing the structural unit M in the formula (20) and represented by the formula (21):

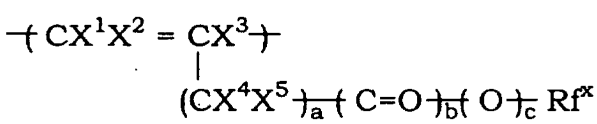

(21)

wherein $X^1$ and $X^2$ are the same or different and each is H or F; $X^3$ is H, F, $CH_3$ or $CF_3$; $X^4$ and $X^5$ are the same or different and each is H, F or $CF_3$; $Rf^x$ is a group represented by the above-mentioned formula (22), (23), (24) or (25); a is 0 or an integer of from 1 to 3; b and c are the same or different and each is 0 or 1, is a novel compound not disclosed in any literatures. Examples of this novel monomer are as exemplified above.

The present invention further relates to the fluorine-containing resin composition comprising (I) the fluorine-containing polymer having functional group and (II) the rare earth metal ion, wherein the fluorine-containing polymer (I) having functional group contains a moiety represented by the formula (10):

$$- Rf^5 - Y^7(=O)_t - NX^8 - Y^8(=O)_u - Rf^6 - \qquad (10)$$

wherein t and u are the same or different and each is 1 or 2; $Y^7$ and $Y^8$ are independent and each is C atom or S atom; $X^8$ is H, D or halogen atom; when $Y^7$ is C atom, t is 1; when $Y^8$ is C atom, u is 1; $Rf^5$ is a fluorine-containing alkylene group having 1 to 50, preferably 1 to 48 carbon atoms or a fluorine-containing alkylene group having 2 to 100, preferably 2 to 98 carbon atoms and ether bond; $Rf^6$ is a fluorine-containing alkylene group having 1 to 50, preferably 1 to 48 carbon atoms or a fluorine-containing alkylene group having 2 to 100, preferably 2 to 98 carbon atoms and ether bond; when $Rf^5$ is the fluorine-containing alkylene group having 1 to 50 carbon atoms and $Rf^6$ is the fluorine-containing alkylene group having 1 to 50 carbon atoms, the sum of carbon atoms of $Rf^5$ and $Rf^6$ is not more than 51, and when either of $Rf^5$ or $Rf^6$ is the fluorine-containing alkylene group having 2 to 100 carbon atoms and ether bond, the sum of carbon atoms of $Rf^5$ and $Rf^6$ is not more than 101, and also when $Rf^5$ is the fluorine-containing alkylene group having 1 to 48 carbon atoms and $Rf^6$ is the fluorine-containing alkylene group having 1 to 48 carbon atoms, the sum of carbon atoms of $Rf^5$ and $Rf^6$ is not more than 49, and when either of $Rf^5$ or $Rf^6$ is the fluorine-containing alkylene group having 2 to 98 carbon atoms and ether bond, the sum of carbon atoms of $Rf^5$ and $Rf^6$ is not more than 99.

Examples of the structural moiety represented by the formula (10) are:

$-CF_2CF_2-SO_2-NH-SO_2-CF_2CF_2-$ , 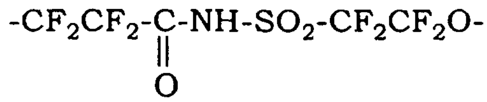 ,

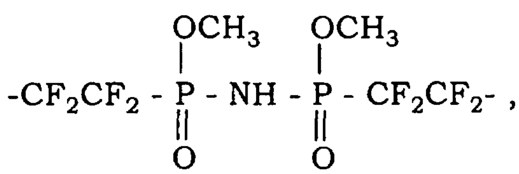 , 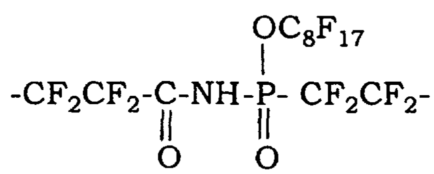 ,

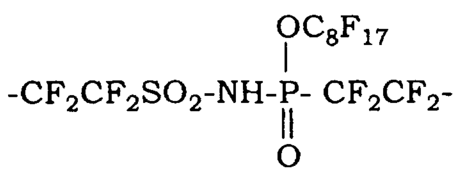 ,

and the like. In the following explanation, the structural moiety represented by the formula (10) is referred to as the structural unit M.

In the fluorine-containing polymer (I) having functional group of the present invention, various combinations and proportions of the structural units M (M1, M2 or M3) and A can be selected from those mentioned above depending on intended applications, physical properties (particularly glass transition temperature, hardness, etc.), functions (transparency and refractive index) and the like.

The fluorine-containing polymer (I) having functional group of the present invention contains the structural unit M (M1, M2 or M3) as essential component and is characterized in that the structural unit M itself has functions of imparting a near infrared transparency and providing a stable structure by forming a complex with the rare earth metal ion (II). Therefore even if the fluorine-containing polymer (I) having functional group contains a larger amount of the structural unit M or in the extreme case, even if the polymer consists of the structural unit M (100 % by mole), a high near infrared transparency can be maintained. Further the polymer is preferred from the point that a stable structure is provided by forming a complex with the rare earth metal ion (II).

Also when the fluorine-containing polymer (I) having functional group is the copolymer comprising the structural unit M and the structural unit A, when the structural unit A is selected from the above-mentioned examples, there can be obtained the polymer having a higher hardness, a higher glass transition temperature and a higher near infrared transparency.

When the fluorine-containing polymer (I) having functional group is the copolymer comprising the structural

unit M and the structural unit A, the proportion of the structural unit M may be not less than 0.1 % by mole based on the whole structural units constituting the fluorine-containing polymer (I) having functional group. In order to obtain the stable structure with the rare earth metal ion (II), it is preferable that the proportion is not less than 2.0 % by mole, preferably not less than 5 % by mole, more preferably not less than 10 % by mole.

Particularly for obtaining high efficiency light amplification materials and light emission materials, it is preferable that the structural unit M is contained in an amount of not less than 10 % by mole, preferably not less than 20 % by mole, more preferably not less than 50 % by mole. An upper limit thereof is lower than 100 % by mole.

The fluorine-containing polymer (I) having functional group of the present invention has preferable characteristics particularly for the light amplification material application in a near infrared region and for the light emission material application in a region of from visible light to near infrared light since transparency is not lowered even if the proportion of the structural unit M is increased (or even if the coordination sites of the rare earth metal ion (II) are increased).

In case of the light amplification material in optical communication application and the light emission material in a region of from visible light to near infrared light, in which a high transparency is required, it is important that the fluorine-containing polymer (I) having functional group has a combination and proportion of the structural units M and A which make the polymer non-crystalline. Being non-crystalline means that in DSC analysis, when measurement is carried out at a heating rate of 10°C/min (ASTM D3418-99), an absorption peak derived from melting is not substantially observed or heat of fusion is not more than 1 J/g.

It is preferable that the fluorine content of the fluorine-containing polymer (I) having functional group is not less than 25 % by weight.

If the fluorine content is low, transparency in a near infrared region is lowered. Also if the fluorine content is low, moisture absorption is increased and therefore the polymer cannot be used substantially as an optical material for optical communication, etc. For the light amplification material and light emission material applications, most preferable fluorine content is not less than 40 % by weight. An upper limit of the fluorine content varies depending on the composition of the fluorine-containing polymer (I) and is about 75 % by weight which is a fluorine content when all hydrogen atoms are replaced with fluorine atoms.

The fluorine-containing polymer (I) having functional group of the present invention is preferably one having a maximum absorption coefficient of not more than 1 $cm^{-1}$ at specific communication bands (1,290 to 1,320 nm, 1,530 to 1,570 nm and 600 to 900 nm). Polymers having an absorption coefficient higher than that are not suitable as a light amplification material used for optical communication.

The rare earth metal ion (II) which is an another component in the fluorine-containing resin composition of the present invention is admixed to impart optical functionality, namely light amplifying action and light emitting action to the resin composition.

The rare earth metal ion is present in the composition in the form of usual ion bonding, coordinate bonding or a complex.

Example of the rare earth metal ion (II) which is used in the present invention is at least one selected from the group consisting of erbium (Er) ion, thulium (Tm) ion, praseodymium (Pr) ion, holmium (Ho) ion, neodymium (Nd) ion, europium (Eu) ion, dysprosium (Dy) ion, samarium (Sm) ion, cerium (Ce) ion and terbium (Tb) ion. The fluorine-containing resin composition of the present invention contains the rare earth metal ion (II) in the form of cation, and the rare earth metal ions may be mixed alone or in a mixture thereof.

The valence of the rare earth metal cation is not limited particularly, and a divalent cation or trivalent cation is usually used. Also the rare earth metal cation is usually mixed in the form of a rare earth metal compound or a complex. Concretely halides such as chlorides, bromides and iodides; and salts such as nitrates, perchlorates, bromates, acetates, sulfates and phosphates are suitable as the rare earth metal compound from the viewpoint of good dispersibility in the fluorine-containing polymer (I) having functional group. Also double salt of nitrates, double salt of sulfates, chelated compounds and complex can be used. Examples thereof are, for instance, sulfonamides, sulfonimides, β-diketones, sulfonic acids, phosphoric acids and the like. Particularly preferred are fluorine-containing compounds thereof.

Examples of the halides and salts containing the rare earth metal ion suitable in the present invention are praseodymium salts such as praseodymium chloride, praseodymium bromide, praseodymium iodide, praseodymium nitrate, praseodymium perchlorate, praseodymium bromate, praseodymium acetate, praseodymium sulfate and praseodymium phosphate; neodymium salts such as neodymium chloride, neodymium bromide, neodymium iodide, neodymium nitrate, neodymium perchlorate, neodymium bromate, neodymium acetate, neodymium sulfate and neodymium phosphate; europium salts such as europium chloride, europium bromide, europium iodide, europium nitrate, europium perchlorate, europium bromate, europium acetate, europium sulfate and europium phosphate; erbium salts such as erbium chloride; erbium bromide, erbium iodide, erbium nitrate, erbium perchlorate, erbium bromate, erbium acetate, erbium sulfate and erbium phosphate; terbium salts such as terbium chloride, terbium bromide, terbium iodide, terbium nitrate, terbium perchlorate, terbium bromate, terbium acetate, terbium sulfate and terbium phosphate; samarium salts

such as samarium chloride, samarium bromide, samarium iodide, samarium nitrate, samarium perchlorate, samarium bromate, samarium acetate, samarium sulfate and samarium phosphate; and the like.

Also examples of a suitable complex containing rare earth metal ion are, for instance, tris(dibenzoylmethyde) erbium (III), tris(benzoyltrifluoroacetonate) erbium (III), tris(hexafluoroacetonate) erbium (III), tris(dibenzoylmethyde) neodymium (III), tris(benzoyltrifluoroacetonate) neodymium (III), tris(hexafluoroacetonate) neodymium (III) and the like. Also those complexes may be tetrakis complexes such as tetrakis(hexafluoroacetonate) neodymium (III). Other examples are $Nd[C_8F_{17}SO_2NSO_2C_8F_{17}]_3$, $Nd[C_4F_9SO_2NSO_2C_4F_9]_3$, $Nd[C_6F_5SO_2NSO_2C_6F_5]_3$, $Nd[C_4F_9SO_2NSO_2C_6F_5]_3$, $Nd[C_4F_9SO_2NSO_2C_8F_{17}]_3$, $Nd[C_6F_{13}SO_2NSO_2C_6F_{13}]_3$, $Nd[C_2F_5SO_2NSO_2C_2F_5]_3$, $Nd[CF_3SO_2NSO_2CF_3]_3$, $Nd[C_4F_9SO_2NCOC_3F_7]_3$, $Nd[C_4F_9SO_2NCOCF_3]_3$, $Nd[O_3SC_8F_{17}]_3$, $Nd[O_3SCF_3]_3$ and the like.

For light amplifying device application for optical communication, praseodymium salts, neodymium salts, erbium salts and complexes thereof which have an ability of generating fluorescence in a near infrared region are particularly suitable. Among them, most suitable are neodymium salts, praseodymium salts, erbium salts and complexes thereof which have an ability of generating fluorescence having a wavelength of about 1,300 nm to about 1,550 nm which is a signal wavelength suitable for optical fibers of inorganic glass such as silica glass. Also europium salts and complexes thereof are most suitable for amplification of 650 nm band which is a visible wavelength to be used in case where an organic high molecular weight material is used as an optical fiber. For light emitter application, thulium salts and samarium salts for emitting blue light, terbium salts for emitting green light and europium salts for emitting red light are suitable.

It is preferable that the fluorine-containing resin composition of the present invention contains from 0.001 to 25 % by weight (% by weight of ion, hereinafter the same with respect to the content of the rare earth metal ion (II)) of the rare earth metal ion (II). The content of the rare earth metal ion (II) varies depending on kinds of the fluorine-containing polymer (I) having functional group and rare earth metal ion (II) to be used. If the content of rare earth metal ion (II) is less than 0.001 % by weight, desired properties such as intended light amplifying action are not exhibited. On the other hand, if the content of rare earth metal ion (II) exceeds 25 % by weight, there is a case where dispersibility of the rare earth metal ion is lowered. The both cases are not preferred. In applications for optical communication parts such as light amplifying device and optical waveguide and for light emitter, it is preferable to select the content of rare earth metal ion within the range of from 0.01 to 20 % by weight, more preferably from 0.1 to 15 % by weight, most preferably from 0.5 to 10 % by weight from the viewpoint of fluorescence intensity. The content of rare earth metal ion can be determined by burning the organic component in an electric oven of about 600°C and measuring an ash content thereof or can be determined quantitatively by a physical and chemical method such as fluorescent X-ray spectroscopy.

When the fluorine-containing resin composition of the present invention is used for optical communication, its absorption coefficient need be not more than 1 $cm^{-1}$ in each communication band, namely, in any of the wavelength ranges of from 600 to 900 nm, from 1,290 to 1,320 nm and from 1,530 to 1,570 nm to be amplified. If the absorption coefficient exceeds 1 $cm^{-1}$ in those wavelength ranges, the composition absorbs an optical signal itself and can never function as a light amplifying device. Therefore it is demanded as mentioned above that the absorption coefficient of the fluorine-containing polymer (I) having functional group is not more than 1 $cm^{-1}$ in any of the wavelength ranges of from 600 to 900 nm, from 1,290 to 1,320 nm and from 1,530 to 1,570 nm to be amplified. In the composition containing the rare earth metal ion (II), since the rare earth metal ion itself exhibits sensitive absorption in a specific wavelength, there is a case where the absorption coefficient of the composition exceeds 1 $cm^{-1}$ in such a wavelength. Namely, a characteristic absorption wavelength of the rare earth metal ion is, for example, 980 nm, 1,480 nm, etc. in the case of erbium, 820 nm, etc. in the case of neodymium, and 1,017 nm, etc. in the case of praseodymium. When the composition is used as a visible light emission material, it is desirable that the composition is transparent in a visible band.

In the light amplifying device such as an optical fiber amplifier which functions to recover attenuation of communication light, there is used an amplification action in which excitation light (pumping light) effectively exciting the rare earth metal ion which emits fluorescence of the wavelength of communication light is passed continuously and by phenomenon of stimulated emission caused by a communication light pulse, fluorescence having the same pulse waveform as the communication light pulse is generated. Therefore in the case where the fluorine-containing resin composition of the present invention is used for light amplifier application, it is necessary for the composition to have an ability of generating fluorescence derived from the rare earth metal ion (II) in the pumping light.

Also in a light emitting device, the composition contains a rare earth metal ion generating fluorescence at a wavelength of from visible light to near infrared light, and light emission at an intended wavelength is obtained by irradiating with a pumping light. Therefore in the case where the fluorine-containing resin composition of the present invention is used for light emitter application, it is necessary for the composition to have an ability of generating fluorescence derived from the rare earth metal ion (II) in the pumping light.

From these points of view, the fluorine-containing resin composition to be used for light amplification materials and light emission materials may be a fluorine-containing resin composition, in which:

(a) the fluorine-containing polymer (I) having functional group contains two or more kinds of different hetero-atoms

selected from the group consisting of elements of the groups 14, 15 and 16 of Periodic Table of Elements and can form coordinate bond with the rare earth metal ion via the two or more kinds of different hetero-atoms,

(b) a maximum absorption coefficient of the fluorine-containing polymer (I) having functional group is not more than 1 $cm^{-1}$ in the wavelength ranges of from 1,290 to 1,320 nm and/or from 1,530 to 1,570 nm and/or from 600 to 900 nm, and

(c) the rare earth metal ion is at least one selected from the group consisting of erbium (Er) ion, thulium (Tm) ion, praseodymium (Pr) ion, holmium (Ho) ion, neodymium (Nd) ion, europium (Eu) ion, dysprosium (Dy) ion, samarium (Sm) ion, cerium (Ce) ion and terbium (Tb) ion.

The fluorine-containing resin composition of the present invention can be prepared by mixing the rare earth metal ion (II) to the fluorine-containing polymer (I) having functional group. The method of introducing the rare earth metal ion (II) to the fluorine-containing polymer (I) having functional group is not limited particularly. The above-mentioned compound or complex containing the rare earth metal ion (II) may be dissolved or dispersed in the fluorine-containing polymer (I) having functional group, or preferably the rare earth metal ion (II) may be carried on the polymer by making a rare earth complex by forming a four-membered, five-membered or six-membered ring in combination of at least two hetero-atoms in the fluorine-containing polymer (I) having functional group and the rare earth metal ion.

For example, there are (1) a method of preparing the fluorine-containing polymer (I) having functional group by a known synthesizing process such as melt polymerization or anion polymerization after adding the compound or complex containing the above-mentioned rare earth metal ion (II) to the fluorine-containing monomer having functional group which provides the structural unit M and as case demands, carrying out a complex-forming reaction of the rare earth metal ion with the fluorine-containing monomer having functional group, (2) a method of, after adding and mixing the compound or complex containing the above-mentioned rare earth metal ion (II) to a solution obtained by dissolving the fluorine-containing polymer (I) having functional group in a solvent, carrying out complex-forming reaction as case demands, and then eliminating the solvent, (3) a method of melt-kneading the fluorine-containing polymer (I) having functional group and the compound or complex containing the rare earth metal ion (II), and the like method.

Among those methods, the method (2) is most suitable from the viewpoint of good dispersibility of the compound or complex containing the rare earth metal ion in the fluorine-containing polymer having functional group. Particularly suitable is the method of dissolving the fluorine-containing polymer having functional group in a solution of the compound or complex containing the rare earth metal ion, carrying out complex-forming reaction as case demands, and then heating up the obtained uniform solution to distill off the solvent. The composition in the form of solution or dispersion may be used as a starting solution in a process for forming an optical device without distilling off the solvent.

Therefore it is preferable that the fluorine-containing polymer (I) having functional group is soluble in organic solvents, particularly in general-purpose solvents, for example, in at least one of ketone solvents, acetic acid ester solvents, alcohol solvents and aromatic solvents or in a solvent mixture containing at least one of the above-mentioned general-purpose solvents. Solubility in the solvent can be optionally adjusted by selecting kind and content of the structural unit M and kind of the copolymerizable structural unit A to be used as case demands.

When the polymer is soluble in a general-purpose solvent, it is advantageous because when forming an optical devices such as a light amplifying device using the composition of the present invention, spin coating and dip coating can be carried out at forming a film on a substrate. It is also advantageous particularly for forming a waveguide for a single mode in which particularly highly precise control of a coating thickness is required because a material excellent in film forming property and homogeneity can be provided and also from the viewpoint of productivity at forming optical devices such as light amplifying device.

Examples of the solvent are, for instance, cellosolve solvents such as methyl cellosolve, ethyl cellosolve, methyl cellosolve acetate and ethyl cellosolve acetate; ester solvents such as diethyl oxalate, ethyl pyruvate, ethyl-2-hydroxybutyrate, ethyl acetoacetate, butyl acetate, amyl acetate, ethyl butyrate, butyl butyrate, methyl lactate, ethyl lactate, methyl 3-methoxypropionate, ethyl 3-methoxypropionate, methyl 2-hydroxyisobutyrate and ethyl 2-hydroxyisobutyrate; propylene glycol solvents such as propylene glycol monomethyl ether, propylene glycol monoethyl ether, propylene glycol monobutyl ether, propylene glycol monomethyl ether acetate, propylene glycol monoethyl ether acetate, propylene glycol monobutyl ether acetate and dipropylene glycol dimethyl ether; ketone solvents such as 2-hexanone, cyclohexanone, methyl amino ketone and 2-heptanone; alcohol solvents such as methanol, ethanol, propanol, isopropanol and butanol; aromatic hydrocarbons such as toluene and xylene; solvent mixtures of two or more thereof and the like.

Also in order to enhance solubility of the fluorine-containing polymer (I) having functional group, a fluorine-containing solvent may be used as case demands.

Examples of the fluorine-containing solvent are, for instance, $CH_3CCl_2F$(HCFC-141b), a mixture of $CF_3CF_2CHCl_2$ and $CClF_2CF_2CHClF$ (HCFC-225), perfluorohexane, perfluoro(2-butyltetrahydrofuran), methoxy-nonafluorobutane, 1,3-bistrifluoromethylbenzene, and in addition, fluorine-containing alcohols such as:

$H(CF_2CF_2)_nCH_2OH$ (n: an integer of from 1 to 3),
$F(CF_2)_nCH_2OH$ (n: an integer of from 1 to 5) and
$CF_3CH(CF_3)OH$,

benzotrifluoride, perfluorobenzene, perfluoro(tributylamine), $ClCF_2CFClCF_2CFCl_2$ and the like.

Those fluorine-containing solvents may be used alone, in a mixture thereof or in a mixture of one or more of the fluorine-containing solvents and non-fluorine-containing solvents.

Among them, as mentioned above, ketone solvents, acetic acid ester solvents, alcohol solvents and aromatic solvents are preferred from the viewpoint of coatability and productivity of a coating film.

The fluorine-containing polymer (I) having functional group of the present invention may have a cure site within the limit of not lowering transparency in a near infrared region. The cure site is not limited as far as the cure site forms bonding with the cure site itself, other kind of crosslinking site or a crosslinking agent. Examples of the cure site are a polymerizable group such as vinyl, acryloyl or epoxy; a curing group generating condensation reaction such as silanol, trifluorovinyl or a combination of an acid chloride and hydroxyl; a curing group generating addition reaction such as cyano or a combination of amino and -OCN; a chemical structure which generates active chemical species such as radical, carbene and nitrene through decomposition by irradiation of light or with a heat initiator, such as iodine end structure, bromine end structure or azide structure.

The cure site may be present in the fluorine-containing polymer (I) having functional group, and is preferably present in a side chain of the polymer and/ or at an end of a trunk chain of the polymer. Also the cure site may be contained in the above-mentioned Rf containing at least two hetero-atoms in the structural unit.

Among those cure sites, preferred is the polymerizable curing group from the viewpoint of good reaction efficiency, and particularly preferred is a curing group having an addition-polymerizable carbon-carbon double bond. Also it is preferable that the carbon-carbon double bond is present at an end of the polymer side chain. As the addition-polymerization reaction, any of radical polymerization, cation polymerization and anion polymerization may be used.

Examples of the curing group having addition-polymerizable carbon-carbon double bond being present at an end of the polymer side chain are as follows.

$$-O-CF=CF_2,\ -O-(C=O)CF=CH_2,\ -O-(C=O)CF=CF_2,$$

$$-O-CH=CH_2,\ -O-(C=O)CH=CH_2,\ -O-(C=O)C(CF_3)=CF_2,$$

$$-(C=O)-O-CH=CH_2,\ -O-(C=O)C(CH_3)=CH_2,\ -O-CH=CF_2,$$

$$-O-(C=O)C(CF_3)=CH_2 \text{ and } -O-CF=CF_2.$$

The fluorine-containing resin composition of the present invention can be obtained even only from the fluorine-containing polymer (I) having functional group and the rare earth metal ion (II) and may be in the form of a photo-curable composition by adding thereto an active energy curing initiator (III) such as a photoradical generator (III-1) or a photoacid generator (III-2) when the fluorine-containing polymer (I) having functional group has a cure site.

The active energy curing initiator (III) generates a radical or a cation (acid) only by irradiation of active energy ray, for example, an electromagnetic wave having a wavelength of not more than 350 nm such as ultraviolet light, electron beam, X-ray, $\gamma$-ray or the like and functions as a catalyst for initiating curing (crosslinking reaction) through the cure site of the fluorine-containing polymer. Usually an initiator generating a radical or a cation (acid) by irradiation of ultraviolet light is used and particularly one generating a radical is used.

When the fluorine-containing polymer (I) having functional group has the cure site, according to the fluorine-containing resin composition of the present invention for light amplification materials and light emission materials, the curing reaction can be initiated easily with the above-mentioned active energy rays, heating at high temperature is not necessary and the curing reaction can be carried out at relatively low temperature. Therefore the fluorine-containing resin composition is preferred since it can be applied on a substrate, for example, a transparent resin substrate which has a low heat resistance and is apt to be deformed, decomposed or colored due to heat.

In the composition of the present invention, the active energy curing initiator (III) is optionally selected depending on kind (radically reactive or cationically (or acid)-reactive) of the cure site in the fluorine-containing polymer (I) having functional group, kind (wavelength range, etc.) of the active energy ray, intensity of irradiation, etc.

Generally examples of the initiator (photoradical generator) for curing the fluorine-containing polymer (I) having functional group which has a radically reactive cure site by using active energy rays in an ultraviolet region are, for instance, those mentioned below.

Acetophenone initiators

Acetophenone, chloroacetophenone, diethoxyacetophenone, hydroxyacetophenone, α-aminoacetophenone and the like.

Benzoin initiators

Benzoin, benzoinmethylether, benzoinethylether, benzoinisopropylether, benzoinisobutylether, benzyldimethylketal and the like.

Benzophenone initiators

Benzophenone, benzoyl benzoate, methyl-o-benzoylbenzoate, 4-phenylbenzophenone, hydroxybenzophenone, hydroxypropylbenzophenone, acrylated benzophenone, Michler's ketone and the like.

Thioxanthone initiators

Thioxanthone, chlorothioxanthone, methylthioxanthone, diethylthioxanthone, dimethylthioxanthone and the like.

Other initiators

Benzyl, α-acyloxime ester, acylphosphine oxide, glyoxyester, 3-ketocoumaran, 2-ethylanthraquinone, camphorquinone, anthraquinone and the like.
Also as case demands, an auxiliary for photo-initiation such as amines, sulfones or sulfines may be added.
Also examples of the initiator (photoacid generator) for curing the fluorine-containing polymer (I) having functional group which has a cationically (or acid)-reactive cure site are those mentioned below.

Onium salts

Iodonium salt, sulfonium salt, phosphonium salt, diazonium salt, ammonium salt, pyridinium salt and the like.

Sulfone compounds

β-ketoester, β-sulfonylsulfone, α-diazo compounds thereof and the like.

Sulfonic acid esters

Alkylsulfonic acid ester, haloalkylsulfonic acid ester, arylsulfonic acid ester, iminosulfonate and the like.

Others

Sulfone imide compounds, diazomethane compounds and the like.
Examples of the radically reactive cure site are, for instance, those represented by the formulae:

$$-O-(C=O)CF=CH_2,\ -O-(C=O)CH=CH_2,\ -O-(C=O)C(CF_3)=CH_2$$

and the like, and examples of the cationically reactive cure site are, for instance, those represented by the formulae:

$$-O-CH=CH_2,\ -(C=O)-O-CH=CH_2$$

and the like.
As mentioned above, in case where the fluorine-containing polymer (I) having functional group has a cure

site, the fluorine-containing resin composition of the present invention for light amplification materials and light emission materials comprises, the fluorine-containing polymer (I) having functional group and the rare earth metal ion (II), and further if necessary, an active energy curing initiator (III) may be added to form a curable fluorine-containing resin composition, and thereto may be added a solvent mentioned infra to make a solution of fluorine-containing resin composition for coating. Further thereto may be added a curing agent.

Preferred curing agents are those which have at least one carbon-carbon unsaturated bond and can be polymerized with a radical or an acid. Examples thereof are radically polymerizable monomers such as acrylic monomers and cationically polymerizable monomers such as vinyl ether monomers. Those monomers may be monofunctional monomers having one carbon-carbon double bond or polyfunctional monomers having two or more carbon-carbon double bonds.

Those so-called curing agents having a carbon-carbon unsaturated bond can react by a radical or a cation generated by reaction of the active energy curing initiator in the composition of the present invention with active energy ray such as light, and can be crosslinked with the carbon-carbon double bond of the fluorine-containing polymer (I) by copolymerization in case where the fluorine-containing polymer (I) having functional group in the composition of the present invention has such a carbon-carbon double bond as a cure site.

Examples of the monofunctional acrylic monomer are acrylic acid, acrylic acid esters, methacrylic acid, methacrylic acid esters, α-fluoroacrylic acid, α-fluoroacrylic acid esters, maleic acid, maleic anhydride, maleic acid esters and (meth)acrylic acid esters having epoxy, hydroxyl, carboxyl or the like.

Among them, particularly preferred are acrylate monomers having a fluoroalkyl group in order to maintain a high near infrared transparency of a cured article. For example, preferred are compounds represented by the formula:

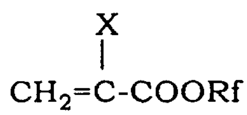

wherein X is H, $CH_3$ or F; Rf is a fluorine-containing alkyl group having 2 to 40 carbon atoms or a fluorine-containing alkyl group having 2 to 100 carbon atoms and ether bond.

Examples thereof are:

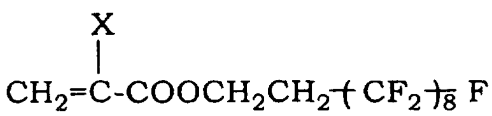 , 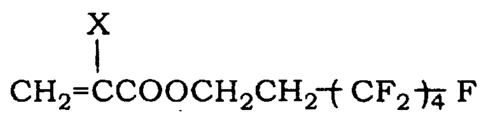 ,

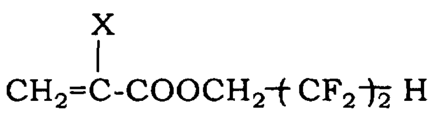 , 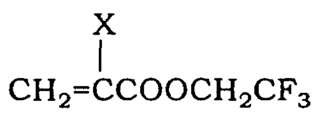 ,

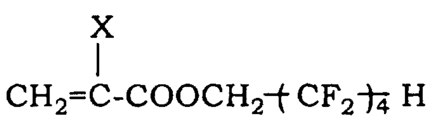 , 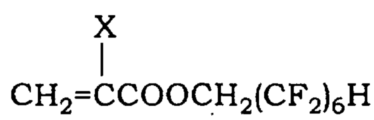 ,

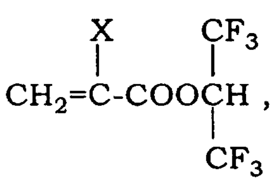 , 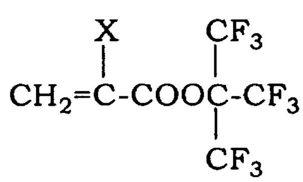 ,

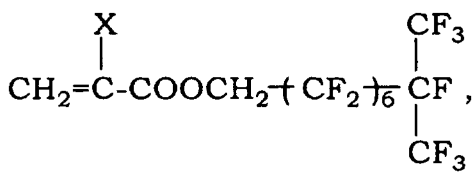

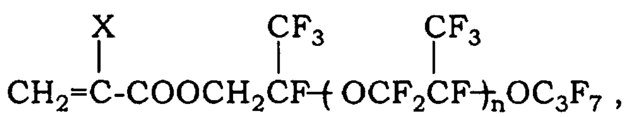

(X: H, $CH_3$ or F; n: an integer of from 1 to 5)
and the like.

As the polyfunctional acrylic monomer, there are generally known compounds obtained by replacing hydroxyl groups of polyhydric alcohols such as diol, triol and tetraol with acrylate groups, methacrylate groups or α-fluoroacrylate groups.

Examples thereof are compounds obtained by replacing two or more hydroxyl groups of polyhydric alcohols such as 1,3-butanediol, 1,4-butanediol, 1,6-hexanediol, diethylene glycol, tripropylene glycol, neopentyl glycol, trimethylol propane, pentaerythritol and dipentaerythritol with any of acrylate groups, methacrylate groups or α-fluoroacrylate groups.

Also there can be used polyfunctional acrylic monomers obtained by replacing two or more hydroxyl groups of polyhydric alcohols having a fluorine-containing alkyl group or a fluorine-containing alkylene group with acrylate groups, methacrylate groups or α-fluoroacrylate groups. Those monomers are preferred particularly from the point that a high near infrared transparency of a cured article can be maintained.

Preferable examples thereof are compounds having structures obtained by replacing two or more hydroxyl groups of fluorine-containing polyhydric alcohols represented by the formulae:

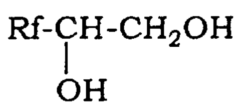 , 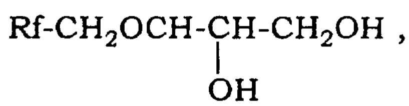

(Rf is a fluorine-containing alkyl group having 1 to 40 carbon atoms)

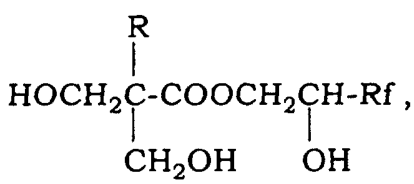

(Rf is a fluorine-containing alkyl group having 1 to 40 carbon atoms; R is H or an alkyl group having 1 to 3 carbon atoms)

$$HO\text{-}CH_2\text{-}Rf'\text{-}CH_2OH,$$

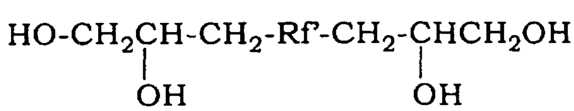

and

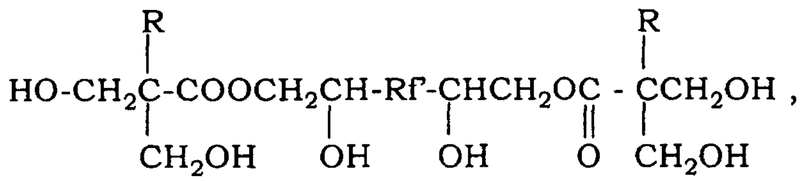

(Rf' is a fluorine-containing alkylene group having 1 to 40 carbon atoms; R is H or an alkyl group having 1 to 3 carbon atoms),
with acrylate groups, methacrylate groups or α-fluoroacrylate groups.

When those exemplified monofunctional and polyfunctional acrylic monomers are used as the curing agent for the composition of the present invention, particularly preferred are α-fluoroacrylate compounds from the viewpoint of good curing reactivity.

In the fluorine-containing resin composition of the present invention for light amplification materials and light emission materials, an adding amount of the active energy curing initiator is optionally selected depending on the content of cure sites in the fluorine-containing polymer (I), an amount of the curing agent and further kinds of the initiator and active energy and an amount of irradiation energy (intensity and time) and also depending on whether or not the curing agent is used. When the curing agent is not used, the amount of the initiator is from 0.01 to 30 parts by weight, preferably from 0.05 to 20 parts by weight, most preferably from 0.1 to 10 parts by weight based on 100 parts by weight of the fluorine-containing polymer (I).

Particularly the amount of the initiator is from 0.05 to 50 % by mole, preferably from 0.1 to 20 % by mole, most preferably from 0.5 to 10 % by mole based on the content (the number of moles) of the cure sites contained in the fluorine-containing polymer (I).

When the curing agent is used, the amount of the initiator is from 0.05 to 50 % by mole, preferably from 0.1 to 20 % by mole, most preferably from 0.5 to 10 % by mole based on the sum of the content (the number of moles) of the cure sites contained in the fluorine-containing polymer (I) and the number of moles of the carbon-carbon unsaturated bonds of the curing agent.

To the composition of the present invention may be added various additives as case demands in addition to the above-mentioned compounds.

Examples of the additives are, for instance, a leveling agent, viscosity control agent, light-stabilizer, moisture absorbing agent, pigment, dye, reinforcing agent and the like.

The present invention also relates to optical devices, namely, light amplifying device and light emitting device in which the fluorine-containing resin composition explained above is used on the core portion thereof.

For producing the optical devices, namely, light amplifying device and light emitting device using the fluorine-containing resin composition of the present invention, there can be employed a method of preparing a coating solution by dissolving the fluorine-containing resin composition in a proper solvent, applying the coating solution on a given substrate to form a film of the fluorine-containing composition of the present invention and then carrying out patterning of the film through usual method into the form of light amplification portion or light emission portion, thereby forming the light amplification portion or light emission portion.

The coating solution containing the composition of the present invention for forming the pattern of light amplification portion or light emission portion may contain, as case demands, additives such as an active energy curing initiator, curing agent, leveling agent and light stabilizer. The solvent for preparing the coating solution is not limited particularly as far as the composition of the present invention is uniformly dissolved or dispersed therein. Particularly preferred are the above-mentioned general-purpose solvents which uniformly dissolve the fluorine-containing polymer (I) having functional group.

The light amplifying device is a kind of optical waveguide device having a core portion and a clad portion and is generally a device which amplifies an intensity of an optical signal while the signal is passed through the core portion of the optical waveguide formed on a substrate. The core portion of the light amplifying device need be formed using a material having a light amplifying action.

The light amplifying device of the present invention has the core portion (a portion of the optical waveguide having a light amplifying action) made of the above-mentioned fluorine-containing resin composition of the present invention containing the rare earth metal ion.

When the fluorine-containing resin composition of the present invention is used on the core portion of the light amplifying device, a proper clad material is required. As the material for the clad portion, it is necessary to use one having a refractive index lower than that of the material for the core portion. When the fluorine-containing resin composition of the present invention is used on the core portion, the material for the clad portion is not limited particularly, and conventional organic materials are used. It is a matter of course that the fluorine-containing polymer (I) having

functional group may be used without mixing the rare earth metal ion thereto.

The light emitting device of the present invention encompasses, for example, electroluminescent device, luminescent organic polymer, light emission diode, optical fiber laser, laser device, optical fiber, back lighting system for liquid crystal displays, photodetector and the like and can be applied on a large size display, illumination, liquid crystal, photo-disk, laser printer, laser for medical use, laser processing machine, printing machine, copying machine, etc.

In case of the light emitting device comprising the core portion and clad portion, like the light amplifying device, it is possible that the light emission material of the present invention is used on the core portion, and on the clad portion is used a conventional organic material, for example, the above-mentioned fluorine-containing polymer (I) having functional group as it is. The light amplifying device and light emitting device of the present invention can be produced by known method except that the fluorine-containing resin composition of the present invention is used on the core portion.

General production steps of optical waveguide device (light amplifying device and light emitting device) are shown in Fig. 1. First, a lower clad layer 2 is formed on a substrate 1. The clad layer 2 is formed using a material having a refractive index lower than that of a core layer 3. Then the core layer 3 is formed on the lower clad layer 2 using the fluorine-containing resin composition of the present invention. Further a mask pattern 4 of an optical waveguide is formed on the core layer 3 through a photolithograph method. On the core layer 3 having the mask pattern 4 formed thereon, etching is carried out through RIE (reactive ion etching) method to form a core pattern 5 of the optical waveguide. After removing the mask, an upper clad layer 6 is formed on the core pattern 5 of the optical waveguide. Thus the optical waveguide device (light amplifying device or light emitting device) is produced.

Also a multi-functional optical circuit can be produced when the light amplifying device or light emitting device of the present invention is integrated with other optical devices. Examples of the other optical device are a photo-switch, photo-filter, optical branch device, etc. Particularly preferred is an optical circuit having, on the same substrate, the light amplifying device of the present invention and an optical branching device having a N-branch waveguide (N represents an integer of 2 or more) which is made of the same material as a core portion of the light amplifying device and is connected to an output end of the core portion because the optical circuit can be used as a branch device assuring a small loss of light.

The present invention is then explained by means of examples, but is not limited to them.

PREPARATION EXAMPLE 1

(Synthesis 1 of fluorine-containing allyl ether having hetero-atom)

A tetrahydrofuran solution of methyltrifluoromethylsulfone (14.8 g/100 mmol) was added dropwise at 10°C in an atmosphere of nitrogen gas into a tetrahydrofuran solution in which sodium hydride (2.4 g/100 mmol) was suspended, followed by stirring at that temperature for 10 minutes. Then ethyl 9H,9H-perfluoro-2,5-dimethyl-3,6-dioxa-8-nonenoate (45 g/100 mmol): $CH_2=CFCF_2OCF(CF_3)CF_2OCF(CF_3)CO_2C_2H_5$ was added dropwise to the solution at 0°C, followed by heating and refluxing for two hours. The reaction solution was poured into water to separate an organic layer, and then the aqueous layer was extracted with ether, and the ether layer was mixed with the organic layer and then dried by using magnesium sulfate, followed by distilling off the solvent under reduced pressure. The obtained crude product was subjected to rectification under reduced pressure and 9H,9H-perfluoro-2,5-dimethyl-3,6-dioxa-8-nonenyl 1-(trifluoromethylsulfonyl)methyl ketone: $CH_2=CFCF_2OCF(CF_3)CF_2OCF(CF_3)COCH_2SO_2CF_3$ was obtained (34.8 g/63 mmol).

PREPARATION EXAMPLE 2

(Synthesis 2 of fluorine-containing allyl ether having hetero-atom)

Into a 300 ml three-necked flask equipped with a cooling ring were poured 100 ml of THE, 9H,9H-perfluoro-2,5-dimethyl-3,6-dioxa-8-nonenoic acid amide (42.1 g, 100 mmol): $CH_2=CFCF_2OCF(CF_3)CF_2OCF(CF_3)CONH_2$ and sodium hydride (24 g, 100 mmol), followed by stirring at room temperature in an atmosphere of nitrogen gas for one hour. Then thereto was added $C_8F_{17}SO_2F$ (50.2 g, 100 mmol), followed by refluxing for three hours. The reaction solution was poured into water to separate an organic layer, and then the aqueous layer was extracted with ether, and the ether layer was mixed with the organic layer and then dried by using magnesium sulfate, followed by distilling off the solvent under reduced pressure to obtain $CH_2=CFCF_2OCF(CF_3)CF_2OCF(CF_3)CONHSO_2C_8F_{17}$ (63.0 g, 70 mmol).

PREPARATION EXAMPLE 3

(Synthesis of homopolymer of fluorine-containing allyl ether having hetero-atom)

Into a 100 ml four-necked glass flask equipped with a stirrer and thermometer were poured 10.0 g of 9H,9H-perfluoro-2,5-dimethyl-3,6-dioxa-8-nonenyl 1-(trifluoromethylsulfonyl)methyl ketone: $CH_2=CFCF_2OCF(CF_3)CF_2OCF(CF_3)COCH_2SO_2CF_3$ and 5.2 g of a perfluorohexane solution of 8.0 % by weight of:

$$[H(CF_2CF_2)_3COO]_2$$

and after the inside of the flask was sufficiently replaced with nitrogen gas, stirring was carried out at 30°C for five hours in a stream of nitrogen gas and thereby a solid having a high viscosity was produced.

The obtained solid was dissolved in acetone and poured into perfluorohexane, followed by separating and vacuum-drying to obtain 6.8 g of transparent colorless polymer.

According to $^{19}F$-NMR, $^1H$-NMR and IR analyses, the polymer was a fluorine-containing polymer consisting of the structural unit of the above-mentioned fluorine-containing allyl ether and having hetero-atoms in its side chain. The number average molecular weight of the polymer was 5,200 according to the GPC analysis using tetrahydrofuran (THF) as a solvent and the weight average molecular weight thereof was 6,500.

PREPARATION EXAMPLE 4

(Synthesis of copolymer of fluorine-containing allyl ether having hetero-atom)

Into a 100 ml four-necked glass flask equipped with a stirrer and thermometer were poured 9.9 g of 9H,9H-perfluoro-2,5-dimethyl-3,6-dioxa-8-nonenyl 1-(trifluoromethylsulfonyl)methyl ketone: $CH_2=CFCF_2OCF(CF_3)CF_2OCF(CF_3)COCH_2SO_2CF_3$ and 10.1 g of methyl 9H,9H-perfluoro-2,5-dimethyl-3,6-dioxa-8-nonenoate:

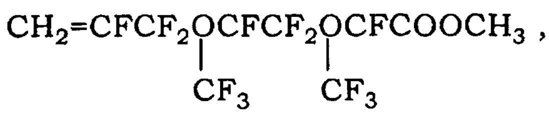

followed by stirring sufficiently. Then thereto was added 2.0 g of perfluorohexane solution of 8.0 % by weight of:

$$[H(CF_2CF_2)_3COO]_2$$

and after the inside of the flask was sufficiently replaced with nitrogen gas, stirring was carried out at 20°C for 20 hours in a stream of nitrogen gas and thereby a solid having a high viscosity was produced.

The obtained solid was dissolved in acetone and then poured into a solution of HCFC225/n-hexane=1/1, followed by separating and vacuum-drying to obtain 15.4 g of a transparent colorless polymer.

According to $^{19}F$-NMR, $^1H$-NMR and IR analyses, the polymer was a fluorine-containing polymer comprising the structural unit of the above-mentioned fluorine-containing allyl ether having carboxyl and the structural unit of the fluorine-containing allyl ether having a methyl ester structure.

The ratio thereof was 47:53 (mole ratio) according to NMR analysis.

The number average molecular weight of the polymer was 9,500 according to the GPC analysis using tetrahydrofuran (THF) as a solvent and the weight average molecular weight thereof was 12,000.

PREPARATION EXAMPLE 5

(Synthesis of homopolymer of fluorine-containing allyl ether having hetero-atom)

Into a 100 ml four-necked glass flask equipped with a stirrer and thermometer were poured 10.0 g of $CH_2=CFCF_2OCF(CF_3)CF_2OCF(CF_3)CONHSO_2C_8F_{17}$ and 5.1 g of perfluorohexane solution of 8.0 % by weight of:

$$[H\text{-}(CF_2CF_2)_3\text{-}COO]_2$$

and after the inside of the flask was sufficiently replaced with nitrogen gas, stirring was carried out at 30°C for five hours in a stream of nitrogen gas and thereby a solid having a high viscosity was produced.

The obtained solid was dissolved in acetone and then poured into perfluorohexane, followed by separating and vacuum-drying to obtain 7.2 g of transparent colorless polymer.

According to $^{19}$F-NMR, $^{1}$H-NMR and IR analyses, the polymer was a fluorine-containing polymer consisting of the structural unit of the above-mentioned fluorine-containing allyl ether and having hetero-atoms in its side chain. The number average molecular weight of the polymer was 6,200 according to the GPC analysis using tetrahydrofuran (THF) as a solvent and the weight average molecular weight thereof was 7,800.

PREPARATION EXAMPLE 6

(Comparative preparation example)

Into a 100 ml four-necked glass flask equipped with a stirrer and thermometer were poured 10.0 g of compound having no functional group and represented by the following formula:

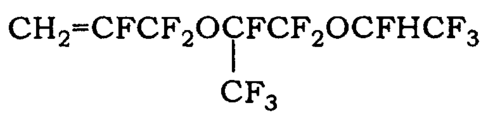

and 4.1 g of perfluorohexane solution of 8.0 % by weight of:

$$[H\text{-}(CF_2CF_2)_3\text{-}COO]_2$$

and after the inside of the flask was sufficiently replaced with nitrogen gas, stirring was carried out at 30°C for 6.5 hours in a stream of nitrogen gas and thereby a solid having a high viscosity was produced.

The obtained solid was dissolved in acetone and then poured into perfluorohexane, followed by separating and vacuum-drying to obtain 6.62 g of transparent colorless polymer.

According to $^{19}$F-NMR, $^{1}$H-NMR and IR analyses, the polymer was a fluorine-containing polymer consisting of the structural unit of the above-mentioned fluorine-containing allyl ether. The number average molecular weight of the polymer was 13,000 according to the GPC analysis using tetrahydrofuran (THF) as a solvent and the weight average molecular weight thereof was 20,000.

EXAMPLE 1

(Preparation of fluorine-containing resin composition containing rare earth metal)

Into a 100 ml four-necked glass flask equipped with a stirrer and thermometer were poured 2.0 g of fluorine-containing allyl ether homopolymer having hetero-atoms which was obtained in Preparation Example 3 and 15 g of methanol, and a solution obtained by dissolving 0.62 g (1.54 mmol) of europium (III) acetate, tetrahydrate (Eu $(CH_3COO)_3 \cdot 4H_2O$) in 8 g of water was added thereto dropwise over five minutes with stirring. After completion of the addition, 2-hour stirring was continued at about 60°C, followed by allowing to stand for 30 minutes to precipitate a produced viscous solid. The supernatant methanol solution was removed by decantation and the solid was washed with acetone three times and then vacuum-dried at 60°C for 12 hours to obtain 2.1 g of colorless transparent solid.

EXAMPLE 2

(Preparation of fluorine-containing resin composition containing rare earth metal)

Into a 100 ml four-necked glass flask equipped with a stirrer and thermometer were poured 2.0 g of fluorine-containing allyl ether homopolymer having hetero-atoms which was obtained in Preparation Example 3 and 15 g of methanol, and a solution obtained by dissolving 0.61 g (1.61 mmol) of erbium chloride, hexahydrate ($ErCl_3 \cdot 6H_2O$) in 3 g of methanol was added thereto dropwise over five minutes with stirring. After completion of the addition, 2-hour stirring was continued, followed by heating up to 60°C while concentrating the solution with an evaporator. The heating was continued for one hour to obtain 2.2 g of light-pink solid.

EXAMPLE 3

(Preparation of fluorine-containing resin composition containing rare earth metal)

Into a 100 ml four-necked glass flask equipped with a stirrer and thermometer were poured 2.0 g of fluorine-containing allyl ether copolymer having hetero-atoms which was obtained in Preparation Example 4 and 15 g of methanol, and a solution obtained by dissolving 0.31 g (0.77 mmol) of europium (III) acetate, tetrahydrate ($Eu(CH_3COO)_3 \cdot 4H_2O$) in 8 g of water was added thereto dropwise over five minutes with stirring. After completion of the addition, 2-hour stirring was continued at about 60°C, followed by allowing to stand for 30 minutes to precipitate a produced viscous solid. The supernatant methanol solution was removed by decantation and the solid was washed with acetone three times and then vacuum-dried at 60°C for 12 hours to obtain 1.8 g of colorless transparent solid.

EXAMPLE 4

(Preparation of fluorine-containing resin composition containing rare earth metal)

Into a 100 ml four-necked glass flask equipped with a stirrer and thermometer were poured 2.2 g of fluorine-containing allyl ether copolymer having hetero-atoms which was obtained in Preparation Example 4 and 15 g of methanol, and a solution obtained by dissolving 0.30 g (0.80 mmol) of europium chloride, hexahydrate ($ErCl_3 \cdot 6H_2O$) in 3 g of methanol was added thereto dropwise over five minutes with stirring. After completion of the addition, 2-hour stirring was continued, followed by heating up to 60°C while concentrating the solution with an evaporator. The heating was continued for one hour to obtain 2.0 g of light-pink solid.

COMPARATIVE EXAMPLE 1

(Preparation of fluorine-containing resin composition having no functional group)

Into a 100 ml four-necked glass flask equipped with a stirrer and thermometer were poured 2.00 g of fluorine-containing allyl ether homopolymer having no functional group which was obtained in Preparation Example 6 and 15 g of methanol, and a solution obtained by dissolving 0.62 g (1.54 mmol) of europium (III) acetate, tetrahydrate ($Eu(CH_3COO)_3 \cdot 4H_2O$) in 8 g of water was added thereto dropwise over five minutes with stirring. After completion of the addition, 2-hour stirring was continued at about 60°C, followed by allowing to stand for 30 minutes to precipitate a produced viscous solid. The supernatant methanol solution was removed by decantation and the solid was washed with acetone three times and then vacuum-dried at 60°C for 12 hours. The obtained product got turbid in white and could not be used for optical applications.

REFERENCE EXAMPLE 1

(Evaluation of physical properties of fluorine-containing polymer having functional group)

(1) Preparation of fluorine-containing resin composition

The fluorine-containing polymers having functional group which were obtained in Preparation Examples 3, 4 and 5, respectively were dissolved in methyl ethyl ketone (MEK) and a concentration of the polymers was adjusted to 50 % by weight.

(2) Production of film of fluorine-containing polymer having functional group

The 50 % MEK solution of fluorine-containing polymer having functional group was coated on a PET film with an applicator so that an intended coating thickness after the drying could be obtained. After vacuum-drying at 50°C for ten minutes, the obtained cast film was peeled from the PET film. Thus the films having a thickness of about 1 mm and about 100 μm were obtained.

(3) Measurement of physical properties of film

With respect to the obtained films, the following physical properties were evaluated.

(i) Measurement of absorption coefficient

A spectral transmittance curve of about 1 mm thick film at a wavelength of from 300 to 1,700 nm was determined with a self-recording spectrophotometer (U-3410 available from Hitachi, Ltd.). The absorption coefficient was calculated from the obtained spectrum using the following equation.

Absorption coefficient = Absorbance/Thickness of sample film

The results are shown in Table 1.

(ii) Measurement of refractive index

A refractive index of about 100 μm thick film was measured using an Abbe's refractometer at 25°C with light having a wavelength of 550 nm. The results are shown in Table 1.

(iii) Thermal characteristics (DSC)

Thermal characteristics were measured at a heating rate of 10°C/min using a differential calorimeter (DSC-50 available from Shimadzu Corporation). No clear peak of a crystalline melting point was recognized and any of films were non-crystalline.

(iv) Thermal decomposition temperature

A thermal decomposition temperature was measured in nitrogen gas atmosphere at a heating rate of 10°C/min using a thermogravimeter (TGA-50 available from Shimadzu Corporation). The thermal decomposition temperature was evaluated by a temperature where the weight of the film was reduced by 10 % by weight. The results are shown in Table 1.

TABLE 1

| | Prep. Ex. 3 | Prep. Ex. 4 | Prep. Ex. 5 |
|---|---|---|---|
| Fluorine content (%) | 55 | 55 | 63 |
| Absorption coefficient ($cm^{-1}$) | | | |
| 650 nm | 0.015 | 0.016 | 0.014 |
| 1,310 nm | 0.032 | 0.028 | 0.023 |
| 1,550 nm | 0.312 | 0.212 | 0.202 |
| Refractive index | 1.40 | 1.38 | 1.36 |
| Thermal decomposition temperature (°C) | 258 | 262 | 270 |

Any of the obtained fluorine-containing polymers having functional group were materials having a high transparency and a high heat resistance.

EXAMPLE 5

(Evaluation of physical properties of composition comprising fluorine-containing polymer having functional group and rare earth metal)

With respect to the fluorine-containing resin compositions obtained in Examples 1 to 4, the following physical properties were evaluated.

(i) Measurement of fluorescent spectrum

An absorption spectrum in the wavelength region of from 300 to 1,700 nm was measured with a self-recording spectrophotometer (U-34110 available from Hitachi, Ltd.) to obtain an absorption wavelength corresponding to a peak absorbance which was assumed to be an excitation wavelength for the fluorescence measurement to be carried out below. In case of a sample containing europium, an absorption wavelength derived from europium which was obtained in the above-mentioned measurement of absorption spectrum was assumed to be an excitation wavelength, and a fluorescent spectrum in the wavelength region of from 300 to 700 μm was measured with a fluorophotometer (F-3040 available from Hitachi, Ltd.). In case of a sample containing erbium, since it was known that a fluorescence around 1,500 nm in a near infrared region was generated, whether or not there was a near infrared fluorescence was observed with a near infrared camera (C-5840 available from Hamamatsu Photonics Kabushiki Kaisha). The results are shown in Table 2.

(ii) Measurement of refractive index

A refractive index was measured using an Abbe's refractometer at 25°C with light having a wavelength of 550 nm. The results are shown in Table 2.

(iii) Content of cation of rare earth element

A sample in an amount of about 2 g was measured precisely and subjected to ashing completely at 600°C in an electric oven. The content of cation was calculated from a weight percentage of the residue. The results are shown in Table 2.

(iv) Measurement of fluorescence life

A luminescence life of the sample of Example 1 was measured and was about 0.8 ms. This luminescence life is longer by about $10^4$ times to about $10^6$ times as compared with lives of usual color compounds (for example, fluorescein, rhodamine, etc.), which indicates that a state of inverted population necessary for exhibiting light amplifying action can be easily formed.

(v) Durability test

The sample of Example 1 was stored for one week under environment of a temperature of 80°C and a humidity of 85 %, but there was no lowering of transparency at all.

TABLE 2

| | Ex. 1 | Ex. 2 | Ex. 3 | Ex. 4 |
|---|---|---|---|---|
| Rare earth metal | Eu | Er | Eu | Er |
| Content of rare earth metal (% by weight) | 10 | 9 | 6 | 5 |
| Excitation (nm) wavelength (nm) | 394 | 980 | 394 | 980 |
| Fluorescence (wavelength, nm) | Recognized (615) | Recognized (1,550) | Recognized (615) | Recognized (1,550) |
| Refractive index | 1.42 | 1.41 | 1.40 | 1.40 |

EXAMPLE 6

The polymer obtained in Preparation Example 5 was dissolved in MEK so that the polymer concentration became 5 % by weight. To the solution was added an aqueous solution of europium chloride and the europium ion concentration was adjusted to be 1 % by weight based on the polymer. Then the solution was heated and stirred at about 60°C for five hours. The solution was colorless and transparent. The solution was cast by usual method and the obtained polymer film was also colorless and transparent. The film emitted red light by irradiation of light having a wavelength of 394 nm which is an excitation wavelength of europium.

An integrated intensity of light emission at 615 nm which was measured at the excitation wavelength of 394 nm with a fluorescence spectrophotometer (F-4010 available from Hitachi, Ltd.) was as high as about 50 provided that a reference integrated intensity of europium chloride in an aqueous solution having a concentration of 0.3 mM was assumed to be 1.

COMPARATIVE EXAMPLE 2

(Dispersibility in polymer having no functional group)

Polymethyl methacrylate (ACRYPET available from Mitsubishi Rayon Co., Ltd.) was dissolved in butyl acetate so that the concentration thereof became 5 % by weight. To the solution was added europium chloride and the concentration thereof was adjusted to be 1 % by weight based on the polymer. The solution was colorless and transparent. However when the solution was cast by usual method, the obtained polymer film became turbid in white.

An integrated intensity of light emission at 615 nm was measured with a fluorescence spectrophotometer (F-4010 available from Hitachi, Ltd.) at an excitation wavelength of 394 nm. The integrated intensity was as low as not more than 1 provided that a reference integrated intensity of europium chloride in an aqueous solution having a concentration of 0.3 mM was assumed to be 1.

COMPARATIVE EXAMPLE 3

(Dispersibility in fluorine-containing polymer having no functional group)

Teflon AF1600 (available from E.I. du Pont de Nemours and Company, a fluorine-containing polymer having no functional group) was dissolved in a fluorine-containing solvent (FC-75 available from Three M Co., Ltd.) so that the concentration thereof became 5 % by weight. To the solution was added europium chloride and the concentration thereof was adjusted to be 1 % by weight based on the polymer. The solution became turbid in white. When the solution was cast by usual method, the obtained polymer film also became turbid in white.

PREPARATION EXAMPLE 7

(Synthesis of copolymer of fluorine-containing allyl ether having hetero-atom and hydroxyl)

Into a 100 ml four-necked glass flask equipped with a stirrer and thermometer were poured 10.0 g of 9H,9H-perfluoro-2,5-dimethyl-3,6-dioxa-8-nonenyl 1-(trifluoromethylsulfonyl)methyl ketone: $CH_2=CFCF_2OCF(CF_3)CF_2OCF(CF_3)COCH_2SO_2CF_3$ and 10.0 g of perfluoro(1,1,9,9-tetrahydro-2,5-bistrifluoromethyl-3,6-dioxanonenol) (fluorine-containing allyl ether having OH group):

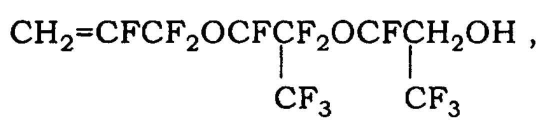

followed by stirring sufficiently. Then thereto was added 10.0 g of perfluorohexane solution of 8.0 % by weight of:

$$[H\text{-}(CF_2CF_2)_3\text{-}COO]_2$$

and after the inside of the flask was sufficiently replaced with nitrogen gas, stirring was carried out at 30°C for 5 hours in a stream of nitrogen gas and thereby a solid having a high viscosity was produced.

The obtained solid was dissolved in acetone and then poured into perfluorohexane, followed by separating and vacuum-drying to obtain 14.2 g of transparent colorless polymer.

According to $^{19}$F-NMR, $^{1}$H-NMR and IR analyses, the polymer was a fluorine-containing polymer consisting of the structural units of the above-mentioned fluorine-containing allyl ethers and having hydroxyl and ketone group at an end of its side chain. The ratio thereof was the fluorine-containing allyl ether having hetero-atom/fluorine-containing allyl ether having hydroxyl = 52/48 (mole ratio). The number average molecular weight of the polymer was 6,900 according to the GPC analysis using tetrahydrofuran (THF) as a solvent and the weight average molecular weight thereof was 8,000.

PREPARATION EXAMPLE 8

(Synthesis of copolymer of fluorine-containing allyl ether having hetero-atom and cure site)

Into a 200 ml four-necked flask equipped with a reflux condenser, thermometer, stirrer and dropping funnel were poured 80 ml of diethyl ether, 5.0 g of fluorine-containing allyl ether copolymer having hetero-atom and hydroxyl which was obtained in Preparation Example 5 and 2.0 g of pyridine, followed by cooling to 5°C or lower with ice.

Then a solution obtained by dissolving 2.2 g of α-fluoroacrylic acid fluoride $CH_2$=CFCOF in 20 ml of diethyl ether was added thereto dropwise over about 30 minutes while stirring in a stream of nitrogen gas.

After completion of the addition, the flask temperature was raised to room temperature and the stirring was further continued for 4.5 hours.

The ether solution after the reaction was poured into the dropping funnel, followed by washing, in order, with water, 2 % hydrochloric acid solution, 5 % NaCl solution and water and then drying with anhydrous magnesium sulfate. Then the ether solution was filtered for separation. Thus a fluorine-containing allyl ether copolymer having hetero-atom and cure site was obtained.

According to $^{19}$F-NMR analysis of the ether solution, a conversion ratio was nearly 100 % and the fluorine content was 57 % by weight. According to IR analysis, an absorption of a carbon-carbon double bond was observed at 1,661 $cm^{-1}$, and according to DSC analysis, the copolymer was recognized to be non-crystalline.

EXAMPLE 7

(Production of cured film)

After MEK was added to the fluorine-containing polymer (ether solution) having hetero-atom and a cure site (α-fluoroacryloyl group) which was obtained in Preparation Example 8, ether was distilled off with an evaporator and the concentration of polymer was adjusted to 50 % by weight. To the solution was added an aqueous solution of europium chloride and the concentration of europium ion was adjusted to 5 % by weight based on the polymer, followed by heating and stirring at about 60°C for five hours. Then to 10 g of this solution was added 0.1 g of 2-hydroxy-2-methylpropiophenone as the active energy curing initiator.

The solution was colorless and transparent. The solution was coated on an aluminum foil with an applicator so that the coating thickness became about 100 µm, followed by vacuum-drying at 50°C for 10 minutes. After the drying, the coating film was irradiated with ultraviolet light at an intensity of 1,000 mJ/$cm^2$U using a high pressure mercury lamp and then the aluminum foil was melted with diluted hydrochloric acid to obtain a sample film.

The obtained film was colorless and transparent. When the film was irradiated with light of 394 nm which was an excitation wavelength of europium, strong emission of red light arose.

PREPARATION EXAMPLE 9

(Copolymer comprising vinylidene fluoride and $CF_2=CFCF_2CF_2PO(OH)_2$)

A 400 ml stainless steel autoclave having a glass vessel therein was charged with 6.5 g of $CF_2=CFCF_2CF_2PO(OH)_2$ and 100 ml of $H_2O$, and the inside of the autoclave was sufficiently replaced with nitrogen gas. Then thereto was added 17.5 kg/$cm^2$G of vinylidene fluoride. At the time when the autoclave temperature was raised to 60°C, an aqueous solution of ammonium persulfate (APS) (containing 300 mg of APS) was added. Nineteen hours after, reaction was terminated, and after washing with water, hydrochloric acid and methanol, respectively, the solution was evaporated to dryness to collect a polymer. The collected polymer was colorless and transparent. The polymer was soluble in DMF but not in acetone. According to $^{19}$F-NMR analysis, the content of phosphonic acid monomer in the polymer

was 6 % by mole. The fluorine content of the polymer was 58 % by weight.

PREPARATION EXAMPLE 10

(Copolymer comprising vinylidene fluoride and $CF_2=CFPO(OCH_3)_2$)

An autoclave was charged with 10 g of $CF_2=CFPO(OCH_3)_2$, 30 ml of 1,1,2-trichloro-1,2,2-trifluoroethane and 50 mg of isopropylperoxycarbonate (IPP), and after the inside of the autoclave was subjected to replacing with nitrogen gas and deairing, 32 g of vinylidene fluoride was added, followed by reaction at 50°C for nine hours. The obtained mixture was dissolved in acetone and poured into an excess amount of 1,1,2-trichloro-1,2,2-trifluoroethane to obtain 7.0 g of polymer. According to $^{19}$F-NMR analysis, the content of phosphonic acid monomer in the polymer was 42 % by mole. The fluorine content of the polymer was 36 % by weight. The number average molecular weight of the polymer was 5,200 according to the GPC analysis using tetrahydrofuran (THF) as a solvent and the weight average molecular weight thereof was 6,000.

The polymer was soluble in organic solvents such as acetone and tetrahydrofuran, and a transparent film could be obtained by a casting method.

EXAMPLE 8

The polymer obtained in Preparation Example 9 was dissolved in DMF and the concentration of polymer was adjust to 5 % by weight. To the solution was added an aqueous solution of europium chloride and the concentration of europium ion was adjusted to 1 % by weight based on the polymer, followed by heating and stirring at about 60°C for five hours. The solution was colorless and transparent. The solution was coated by usual casting method, and the obtained polymer film was also colorless and transparent. When the film was irradiated with light of 394 nm which was an excitation wavelength of europium, emission of red light arose.

EXAMPLE 9

The polymer obtained in Preparation Example 10 was dissolved in MEK and the concentration of polymer was adjusted to 5 % by weight. To the solution was added an aqueous solution of terbium chloride and the concentration of terbium ion was adjusted to 1 % by weight based on the polymer, followed by heating and stirring at about 60°C for five hours. The solution was colorless and transparent. The solution was coated by usual casting method, and the obtained polymer film was also colorless and transparent. When the film was irradiated with light of 304 nm which was an excitation wavelength of terbium, emission of green light arose.

EXAMPLE 10

(Production of light amplifying device)

A light amplifying device was produced in the manner mentioned below.

The light amplifying device was produced using the fluorine-containing resin composition of Example 1 as a material for a core portion and the fluorine-containing polymer of Preparation Example 2 as a material for a clad portion.

Those two kinds of materials were dissolved in methyl isobutyl ketone to make respective solutions. First, the material for a clad portion was coated on a plastic substrate or a silicon substrate in a thickness of about 15 μm. After baking for drying, the material for a core portion was coated on the film of the material for the clad portion in a thickness of about 8 μm. Next, a mask pattern was formed on the core layer by photolithography using a photo mask 4. The core layer on which the mask pattern had been formed was subjected to etching by RIE method to form a core pattern. Thereafter the mask was removed and a linear rectangular pattern of the core portion having a length of 50 mm, a width of 8 μm and a height of 8 μm was formed. After forming the core portion, the clad portion material was coated on the core portion as explained in Fig. 1. Thus the light amplifying device was produced.

Next, a loss of light transmission of the produced light amplifying device was measured by passing light having a wavelength of 633 nm through the core portion. The loss was 0.3 dB/cm.

When the thus produced light amplifying device was irradiated with light by an ultraviolet lamp and viewed from above thereof, there was recognized a red linear pattern of light emission specific to Eu ion in the form corresponding to the core portion. This indicates that the rare earth Eu ion necessary for light amplifying action is contained only in the core portion.

INDUSTRIAL APPLICABILITY

According to the present invention, there can be obtained a suitable light amplification material and light emission material which have a stable structure formed by a specific functional group and a rare earth metal ion while maintaining transparency in a region of from visible light to ultraviolet light. When this fluorine-containing resin composition is used, excellent light amplifying device and light emitting device can be produced by relatively easy steps.

## Claims

**1.** A fluorine-containing resin composition comprising:

(I) a fluorine-containing polymer having functional group and
(II) a rare earth metal ion,

in which a functional group Y of the fluorine-containing polymer (I) having functional group contains two or more kinds of different hetero-atoms selected from the group consisting of elements of the groups 14, 15 and 16 in Periodic Table of Elements and can form coordinate bond with the rare earth metal ion (II) via the two or more kinds of different hetero-atoms.

**2.** The fluorine-containing resin composition of Claim 1, wherein the functional group Y of the fluorine-containing polymer (I) having functional group can form at least one of four-membered, five-membered and six-membered rings with the rare earth metal ion (II) via the two or more kinds of different hetero-atoms contained in the functional group.

**3.** The fluorine-containing resin composition of Claim 1 or 2, wherein the functional group Y contains a structure of:

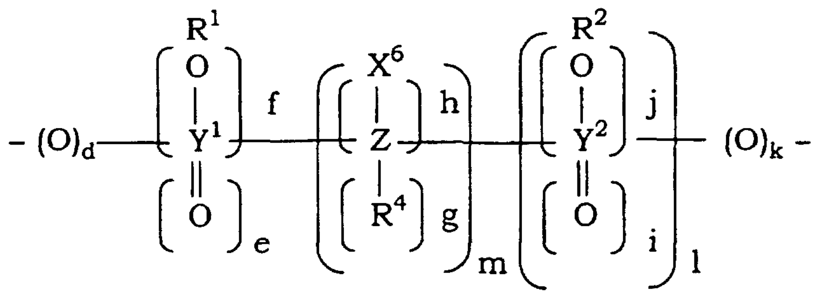

wherein d, f, g, h, j, k, l and m are the same or different and each is 0 or 1; e and i are the same or different and each is 1 or 2; $Y^1$ and $Y^2$ are independent and each is an atom selected from the group consisting of elements of the group 14, the group 15 excluding nitrogen and the group 16 excluding oxygen; Z is an atom of C, N, O, P, As, Sb or Bi; when Z is C atom, g and h are 1; when Z is O atom, g and h are 0; when Z is O atom and l is 0, k is 0; $X^6$ is an atom selected from H, D and halogen atoms; $R^1$ and $R^2$ are the same or different and each is an atom of H or D, a hydrocarbon group having 1 to 20 carbon atoms or a hydrocarbon group having 1 to 20 carbon atoms in which a part or the whole of hydrogen atoms are substituted with heavy hydrogen or halogen atoms; $R^4$ is H, D, halogen atom, a hydrocarbon group having 1 to 20 carbon atoms or a hydrocarbon group having 1 to 20 carbon atoms in which a part or the whole of hydrogen atoms are substituted with heavy hydrogen or halogen atoms; when $Y^1$ is S atom, either of m or l is 1; when $Y^1$ is C atom, e is 1 and f is 0; when $Y^2$ is C atom, i is 1 and j is 0; when f is 1, e is 1; when j is 1, i is 1; $Y^1$, Z and $Y^2$ of the functional group Y are not carbon atoms at the same time, and at least one of $Y^1$, Z and $Y^2$ is a hetero-atom other than oxygen.

**4.** The fluorine-containing resin composition of Claim 1 or 2, wherein the functional group Y contains a structure of:

$$-Y^3(=O)_n - NX^7 - Y^4(=O)_o -$$

wherein n and o are the same or different and each is 1 or 2; $Y^3$ and $Y^4$ are independent and each is C atom or S

atom; $X^7$ is H, D or halogen atom; when $Y^3$ is C atom, n is 1 and when $Y^4$ is C atom, o is 1.

5. The fluorine-containing resin composition of Claim 1 or 2, wherein the functional group Y contains a structure of:

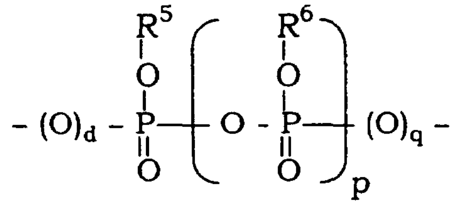

wherein d and q are the same or different and each is 0 or 1; p is 0 or an integer of 1 to 20; $R^5$ and $R^6$ are the same or different and each is H, D, halogen atom, a hydrocarbon group having 1 to 20 carbon atoms or a hydrocarbon group having 1 to 20 carbon atoms in which a part or the whole of hydrogen atoms are substituted with heavy hydrogen or halogen atoms.

6. The fluorine-containing resin composition of Claim 1 or 2, wherein the functional group Y contains a structure of:

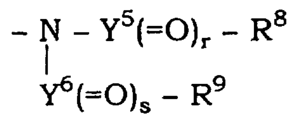

wherein r and s are the same or different and each is 1 or 2; $Y^5$ and $Y^6$ are independent and each is C atom or S atom and when $Y^5$ is C atom, r is 1 and when $Y^6$ is C atom, s is 1; $R^8$ and $R^9$ are the same or different and each is H, D, halogen atom, a hydrocarbon group having 1 to 20 carbon atoms or a hydrocarbon group having 1 to 20 carbon atoms in which a part or the whole of hydrogen atoms are substituted with heavy hydrogen or halogen atoms.

7. The fluorine-containing resin composition of Claim 1 or 2, which comprises:

(I) a fluorine-containing polymer having functional group and
(II) a rare earth metal ion,

in which the fluorine-containing polymer (I) having functional group is a fluorine-containing polymer represented by the formula (1):

$$-(M)-(A)- \qquad (1)$$

in which the structural unit M is a structural unit derived from an ethylenic monomer and represented by the formula (2):

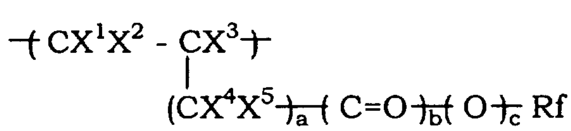

(2)

wherein $X^1$ and $X^2$ are the same or different and each is H or F; $X^3$ is H, F, $CH_3$ or $CF_3$; $X^4$ and $X^5$ are the same or different and each is H, F or $CF_3$; Rf is a monovalent organic group forming a side chain of the polymer and having at least one functional group Y in the side chain or at an end of the side chain, in which the functional group Y comprises two or more kinds of different hetero-atoms selected from elements of the groups 14, 15 and 16; a

is 0 or an integer of from 1 to 3; b and c are the same or different and each is 0 or 1, and coordinate bond can be formed with the rare earth metal ion (II) via the two or more kinds of different hetero-atoms in the functional group Y; the structural unit A is a structural unit derived from a monomer copolymerizable with the monomer for the structural unit M;

and the structural unit M and the structural unit A are contained in amounts of from 0.1 to 100 % by mole and from 0 to 99.9 % by mole, respectively.

**8.** The fluorine-containing resin composition of Claim 7, wherein in the fluorine-containing polymer (I) having functional group of the formula (1), the structural unit M is a structural unit M 1 derived from a fluorine-containing ethylenic monomer and represented by the formula (3):

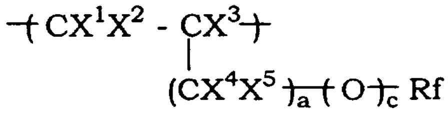

(3)

wherein $X^1$, $X^2$, $X^3$, $X^4$, $X^5$, Rf, a and c are as defined above.

**9.** The fluorine-containing resin composition of Claim 8, wherein in the fluorine-containing polymer (I) having functional group of the formula (1), the structural unit M is a structural unit M2 derived from a fluorine-containing ethylenic monomer and represented by the formula (4):

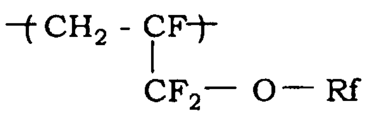

(4)

wherein Rf is as defined above.

**10.** The fluorine-containing resin composition of Claim 8, wherein in the fluorine-containing polymer (I) having functional group of the formula (1), the structural unit M is a structural unit M3 derived from a fluorine-containing ethylenic monomer and represented by the formula (5):

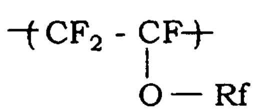

(5)

wherein Rf is as defined above.

**11.** The fluorine-containing resin composition of any of Claims 7 to 10, wherein Rf of said formulae (2), (3), (4) and (5) is:

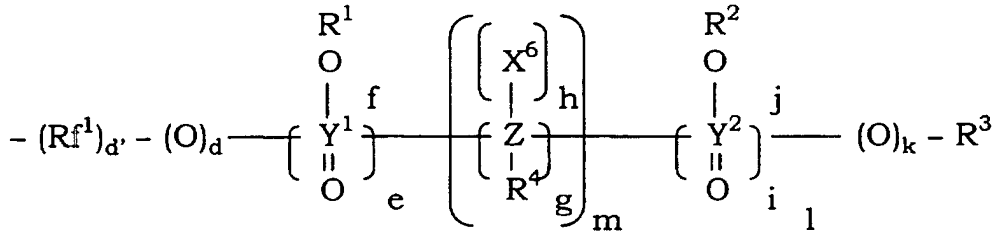

in which d', d, f, g, h, j, k, l and m are the same or different and each is 0 or 1; e and i are the same or different and each is 1 or 2; $Y^1$ and $Y^2$ are independent and each is an atom selected from the group consisting of elements of the group 14, the group 15 excluding nitrogen and the group 16 excluding oxygen; Z is an atom of C, N, O, P, As, Sb or Bi and when Z is C atom, g and h are 1, when Z is O atom, g and h are 0 and when Z is O atom and l is 0, k is 0; $X^6$ is an atom selected from H, D and halogen atoms; $R^1$ and $R^2$ are the same or different and each is an atom of H or D, a hydrocarbon group having 1 to 20 carbon atoms or a hydrocarbon group having 1 to 20 carbon atoms in which a part or the whole of hydrogen atoms are substituted with heavy hydrogen or halogen atoms; $R^3$ and $R^4$ are the same or different and each is H, D, halogen atom, a hydrocarbon group having 1 to 20 carbon atoms or a hydrocarbon group having 1 to 20 carbon atoms in which a part or the whole of hydrogen atoms are substituted with heavy hydrogen or halogen atoms; $Rf^1$ is a fluorine-containing alkylene group having 1 to 50 carbon atoms or a fluorine-containing alkylene group having 2 to 100 carbon atoms and ether bond; when $Y^1$ is S atom, either of m or l is 1; when $Y^1$ is C atom, e is 1 and f is 0; when $Y^2$ is C atom, i is 1 and j is 0; when f is 1, e is 1; when j is 1, i is 1; $Y^1$, Z and $Y^2$ of the functional group Y are not carbon atoms at the same time, and at least one of $Y^1$, Z and $Y^2$ is a hetero-atom other than oxygen.

**12.** The fluorine-containing resin composition of any of Claims 7 to 10, wherein Rf of said formulae (2), (3), (4) and (5) is:

$$-(Rf^2)_{d'}-Y^3(=O)_n-NX^7-Y^4(=O)_o-R^4$$

wherein d' is 0 or 1; n and o are the same or different and each is 1 or 2; $Y^3$ and $Y^4$ are independent and each is C atom or S atom; $X^7$ is H, D or halogen atom; when $Y^3$ is C atom, n is 1, when $Y^4$ is C atom, o is 1; $Rf^2$ is a fluorine-containing alkylene group having 1 to 50 carbon atoms or a fluorine-containing alkylene group having 2 to 100 carbon atoms and ether bond; $R^4$ is H, D, halogen atom, a hydrocarbon group having 1 to 20 carbon atoms or a hydrocarbon group having 1 to 20 carbon atoms in which a part or the whole of hydrogen atoms are substituted with heavy hydrogen or halogen atoms.

**13.** The fluorine-containing resin composition of any of Claims 7 to 10, wherein Rf of said formulae (2), (3), (4) and (5) is:

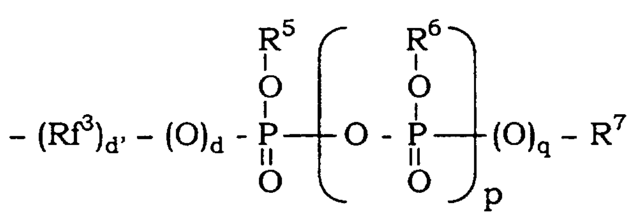

wherein d and d' are the same or different and each is 0 or 1; p is 0 or an integer of 1 to 20; q is 0 or 1; $Rf^3$ is a fluorine-containing alkylene group having 1 to 50 carbon atoms or a fluorine-containing alkylene group having 2 to 100 carbon atoms and ether bond; $R^5$, $R^6$ and $R^7$ are the same or different and each is H, D, halogen atom, a hydrocarbon group having 1 to 20 carbon atoms or a hydrocarbon group having 1 to 20 carbon atoms in which a part or the whole of hydrogen atoms are substituted with heavy hydrogen or halogen atoms.

**14.** The fluorine-containing resin composition of any of Claims 7 to 10, wherein Rf of said formulae (2), (3), (4) and (5) is:

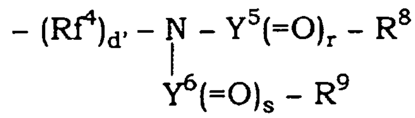

wherein d' is 0 or 1; r and s are the same or different and each is 1 or 2; $Y^5$ and $Y^6$ are independent and each is C atom or S atom and when $Y^5$ is C atom, r is 1 and when $Y^6$ is C atom, s is 1; $Rf^4$ is a fluorine-containing alkylene group having 1 to 50 carbon atoms or a fluorine-containing alkylene group having 2 to 100 carbon atoms and ether bond; $R^8$ and $R^9$ are the same or different and each is H, D, halogen atom, a hydrocarbon group having 1 to 20 carbon atoms or a hydrocarbon group having 1 to 20 carbon atoms in which a part or the whole of hydrogen atoms are substituted with heavy hydrogen or halogen atoms.

**15.** The fluorine-containing resin composition of any of Claims 1 to 14, wherein the fluorine-containing polymer (I) having functional group is a non-crystalline fluorine-containing polymer having a fluorine content of not less than 25 % by weight.

**16.** The fluorine-containing resin composition of Claim15, wherein the fluorine content of the fluorine-containing polymer (I) having functional group is not less than 40 % by weight.

**17.** The fluorine-containing resin composition of any of Claims 1 to 16, wherein the fluorine-containing polymer (I) having functional group has a maximum absorption coefficient of not more than 1 $cm^{-1}$ in a wavelength range of from 1,290 to 1,320 nm.

**18.** The fluorine-containing resin composition of any of Claims 1 to 17, wherein the fluorine-containing polymer (I) having functional group has a maximum absorption coefficient of not more than 1 $cm^{-1}$ in a wavelength range of from 1,530 to 1,570 nm.

**19.** The fluorine-containing resin composition of any of Claims 1 to 18, wherein the fluorine-containing polymer (I) having functional group has a maximum absorption coefficient of not more than 1 $cm^{-1}$ in a wavelength range of from 600 to 900 nm.

**20.** The fluorine-containing resin composition of any of Claims 1 to 19, wherein the rare earth metal ion (II) is at least one selected from the group consisting of erbium (Er) ion, thulium (Tm) ion, praseodymium (Pr) ion, holmium (Ho) ion, neodymium (Nd) ion, europium (Eu) ion, dysprosium (Dy) ion, samarium (Sm) ion, cerium (Ce) ion and terbium (Tb) ion.

**21.** A fluorine-containing resin composition comprising:

(I) a fluorine-containing polymer having functional group and
(II) a rare earth metal ion,

wherein the fluorine-containing polymer (I) having functional group has a moiety represented by the formula (10):

$$- Rf^5 - Y^7(=O)_t - NX^8 - Y^8(=O)_u - Rf^6 - \quad (10)$$

wherein t and u are the same or different and each is 1 or 2; $Y^7$ and $Y^8$ are independent and each is C atom or S atom; $X^8$ is H, D or halogen atom; when $Y^7$ is C atom, t is 1; when $Y^8$ is C atom, u is 1; $Rf^5$ is a fluorine-containing alkylene group having 1 to 50 carbon atoms or a fluorine-containing alkylene group having 2 to 100 carbon atoms and ether bond; $Rf^6$ is a fluorine-containing alkylene group having 1 to 50 carbon atoms or a fluorine-containing alkylene group having 2 to 100 carbon atoms and ether bond; when $Rf^5$ is the fluorine-containing alkylene group having 1 to 50 carbon atoms and $Rf^6$ is the fluorine-containing alkylene group having 1 to 50 carbon atoms, the sum of carbon atoms of $Rf^5$ and $Rf^6$ is not more than 51, and when either of $Rf^5$ or $Rf^6$ is the fluorine-containing alkylene group having ether bond, the sum of carbon atoms of $Rf^5$ and $Rf^6$ is not more than 101.

**22.** An optical article produced using the fluorine-containing resin composition of any of Claims 1 to 21.

**23.** An optical article for light amplification produced using the fluorine-containing resin composition of any of Claims 1 to 21.

**24.** A light amplifying device produced using the fluorine-containing resin composition of any of Claims 1 to 21.

**25.** An optical article for light emission produced using the fluorine-containing resin composition of any of Claims 1 to 21.

**26.** A light emitting device produced using the fluorine-containing resin composition of any of Claims 1 to 21.

**27.** The fluorine-containing resin composition of any of Claims 1 to 21, wherein the fluorine-containing polymer (I) having functional group further has a cure site.

**28.** The fluorine-containing resin composition of Claim 27, wherein the cure site is present at an end of a side chain of the fluorine-containing polymer (I) having functional group and/or at an end of a trunk chain of the polymer.

**29.** The fluorine-containing resin composition of Claim 27 or 28, wherein the cure site is a carbon-carbon double bond.

**30.** The fluorine-containing resin composition of Claim 29, wherein the cure site is an ethylenic carbon-carbon double bond having radical reactivity.

**31.** The fluorine-containing resin composition of Claim 29, wherein the cure site is an ethylenic carbon-carbon double bond having cation reactivity.

**32.** A fluorine-containing resin composition which comprises:

(I) the fluorine-containing polymer having functional group of any of Claims 27 to 31,
(II) a rare earth metal ion and
(III) an active energy curing initiator.

**33.** The fluorine-containing resin composition of Claim 32, wherein the active energy curing initiator (III) is a photoradical generator (III-1).

**34.** The fluorine-containing resin composition of Claim 32, wherein the active energy curing initiator (III) is a photoacid generator (III-2).

**35.** An optical article obtained by curing the fluorine-containing resin composition of any of Claims 27 to 34.

**36.** An optical article obtained by photo-curing the fluorine-containing resin composition of any of Claims 32 to 34.

**37.** An optical article for light amplification obtained by curing the fluorine-containing resin composition of any of Claims 27 to 34.

**38.** A light amplifying device obtained by curing the fluorine-containing resin composition of any of Claims 27 to 34.

**39.** An optical article for light emission obtained by curing the fluorine-containing resin composition of any of Claims 27 to 34.

**40.** A light emitting device obtained by curing the fluorine-containing resin composition of any of Claims 27 to 34.

FIG. 1

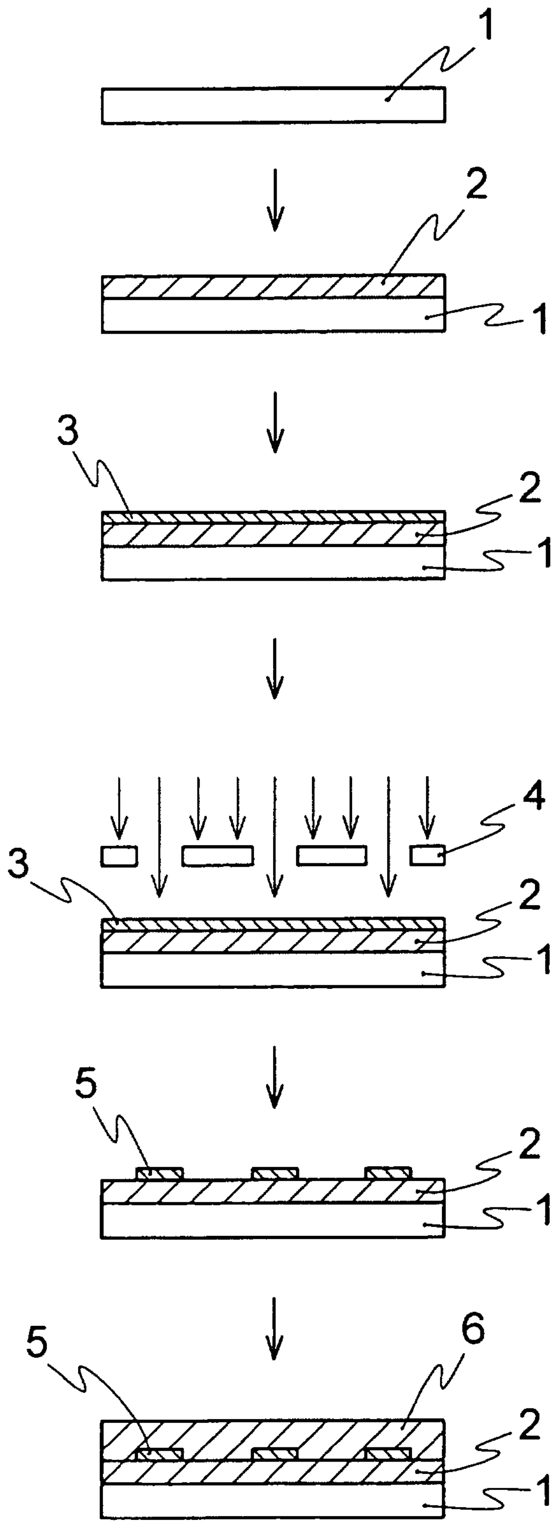

## INTERNATIONAL SEARCH REPORT

International application No.
PCT/JP03/04600

A. CLASSIFICATION OF SUBJECT MATTER
Int.Cl$^7$ C08L101/04, C08K3/00, H01S3/17

According to International Patent Classification (IPC) or to both national classification and IPC

B. FIELDS SEARCHED

Minimum documentation searched (classification system followed by classification symbols)
Int.Cl$^7$ C08L1/00-101/16, C08K3/00-13/08, H01S3/17

Documentation searched other than minimum documentation to the extent that such documents are included in the fields searched

Electronic data base consulted during the international search (name of data base and, where practicable, search terms used)
WPI/L

C. DOCUMENTS CONSIDERED TO BE RELEVANT

| Category* | Citation of document, with indication, where appropriate, of the relevant passages | Relevant to claim No. |
|---|---|---|
| A | JP 11-329061 A (Asahi Chemical Industry Co., Ltd.), 30 November, 1999 (30.11.99), Claims; examples (Family: none) | 1-40 |
| A | JP 9-302134 A (Asahi Chemical Industry Co., Ltd.), 25 November, 1997 (25.11.97), Claims; examples (Family: none) | 1-40 |

☐ Further documents are listed in the continuation of Box C. ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 15 July, 2003 (15.07.03) | 29 July, 2003 (29.07.03) |

| Name and mailing address of the ISA/ | Authorized officer |
|---|---|
| Japanese Patent Office | |
| Facsimile No. | Telephone No. |

Form PCT/ISA/210 (second sheet) (July 1998)